(19) Europäisches Patentamt
European Patent Office
Office européen des brevets

(11) EP 3 608 344 A1

(12) EUROPEAN PATENT APPLICATION

(43) Date of publication:
**12.02.2020 Bulletin 2020/07**

(21) Application number: **19189937.6**

(22) Date of filing: **05.08.2019**

(51) Int Cl.:
***C08F 220/14*** *(2006.01)* ***C08L 33/06*** *(2006.01)*
***C08L 33/26*** *(2006.01)*

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **06.08.2018 EP 18187552**

(71) Applicant: **BASF SE**
**67056 Ludwigshafen am Rhein (DE)**

(72) Inventors:
- **AMIRI NAINI, Crispin**
  **67056 Ludwigshafen (DE)**
- **ROSCHMANN, Konrad**
  **67056 Ludwigshafen (DE)**

(74) Representative: **Reitstötter Kinzebach Patentanwälte**
**Im Zollhof 1**
**67061 Ludwigshafen (DE)**

# (54) WATER-SOLUBLE OR WATER DISPERSIBLE COPOLYMERS HAVING OXAZOLINE AND SULFONIC ACID FUNCTIONAL GROUPS

(57) The present application relates to water-soluble or water dispersible copolymers P which is obtainable by copolymerizing a monomer composition of ethylenically unsaturated monomers M comprising
a) 50 to 92 wt.-%, in particular 53 to 87 wt.-%, especially 55 to 83 wt.-%, based on the total amount of monomers M, of at least one monoethylenically unsaturated monomer M.a selected from the group consisting of nonionic esters of methacrylic acid and $C_8$-$C_{20}$-vinyl aromatic monomers,
b) 3 to 30 wt.-%, in particular 5 to 25 wt.-%, especially 7 to 20 wt.-%, based on the total amount of monomers M, of at least one monoethylenically unsaturated monomer M.b which comprises at least one sulfonic acid group or a salt thereof,
c) 5 to 35 wt.-%, in particular 8 to 30 wt.-%, especially 10 to 25 wt.-%, based on the total amount of monomers M, of at least one monoethylenically unsaturated monomer M.c which comprises at least one oxazoline group,
d) less than 10 wt.-%, in particular at most 5 wt.-% and especially at most 1 wt.-%, based on the total amount of monomers M, of a monoethylenically unsaturated monomer M.d selected from the group consisting of $C_1$-$C_{20}$-alkylesters of acrylic acid,
where the copolymers P do essentially not contain copolymerized monomers bearing a carboxyl group and where the copolymers P have a glass transition temperature, as determined by differential scanning calorimetry according to ISO 11357-2:2013-05, of at most 90°C, in particular at most 85°C and especially at most 80°C.

The present application also relates to a process for preparing the copolymers P and to aqueous solutions or dispersions of the copolymer P. Furthermore, the present application relates to the use of the copolymers P for crosslinking of polyfunctional polymers.

EP 3 608 344 A1

## Description

The present application relates to water-soluble or water dispersible copolymers P which are obtainable by copolymerizing a monomer composition of ethylenically unsaturated monomers M comprising

- at least one monoethylenically unsaturated monomer M.a selected from the group consisting of nonionic esters of methacrylic acid and $C_8$-$C_{20}$-vinyl aromatic monomers,
- at least one monoethylenically unsaturated monomer M.b which comprises at least one sulfonic acid group or a salt thereof,
- at least one monoethylenically unsaturated monomer M.c which comprises at least one oxazoline group.

The present application also relates to a process for preparing the copolymers P and to aqueous solutions of the copolymer P. Furthermore, the present application relates to the use of the copolymers P for crosslinking of polyfunctional polymers.

BACKGROUND OF THE INVENTION

Film-forming polymer dispersions, also termed polymer latexes, are widely used as binders, for example, in coating compositions such as paints, in paper coating slips, but also in sealants, synthetic resin plasters, flexible roofings and for sand consolidation. They may also be used in adhesive compositions, as auxiliaries in the production of textile or leather, as impact modifiers, for modifying mineral binders and plastics, in the production of wood products, such as chipboard, wood panels, cork, parquet flooring, or in the production paper products, such as paper, cardboard, cardboard or wallpaper.

For modifying the properties and strengthen the polymer film, such polymer latexes may be formulated with crosslinkers, in case the polymer latex bears reactive functional groups. These crosslinkers bear complementary functional groups which are capable of reacting with the functional groups of the polymer latex and thereby cure and/or harden the polymer films obtained upon drying of the polymer latex. Functional groups of the polymer latexes may be in particular carboxyl groups, hydroxyl groups, urea groups, aldehyde or keto groups, thiol groups, phosphate groups or epoxy groups. The complementary functional groups of the crosslinkers will depend from the reactive group of the polymer latex and may be epoxy groups, carboxyl groups, carboxy hydrazide groups, aldehyde groups, amino groups, hydroxylamino groups and the like. Polymer latexes which bear carboxyl groups may also be crosslinked by salts of polyvalent metal ions, such as $Zn^{2+}$, $Al^{3+}$ or $Ca^{2+}$ or by boric acid. While these crosslinkers efficiently enhance the mechanical strength of a polymer film obtained upon drying of the respective polymer latex, they have several drawbacks, as they may be expensive or have toxic or environmental issues.

Oxazoline-functionalized polymers and their use for crosslinking polymers bearing carboxyl groups, such as polyacrylic acid, have been described in the art. The oxazoline groups of the crosslinker react with carboxyl groups of the polymer under formation of stable ester groups. This reaction can take place at room temperature or, in particular, at elevated temperature, e.g. in the range of 80 to 120°C. The reaction is depicted in the following scheme 1 for a crosslinking copolymer containing polymerized repeating units of 2-isoproyloxazolidine and a polymer latex bearing polymerized repeating units of acrylic acid:

Scheme 1:

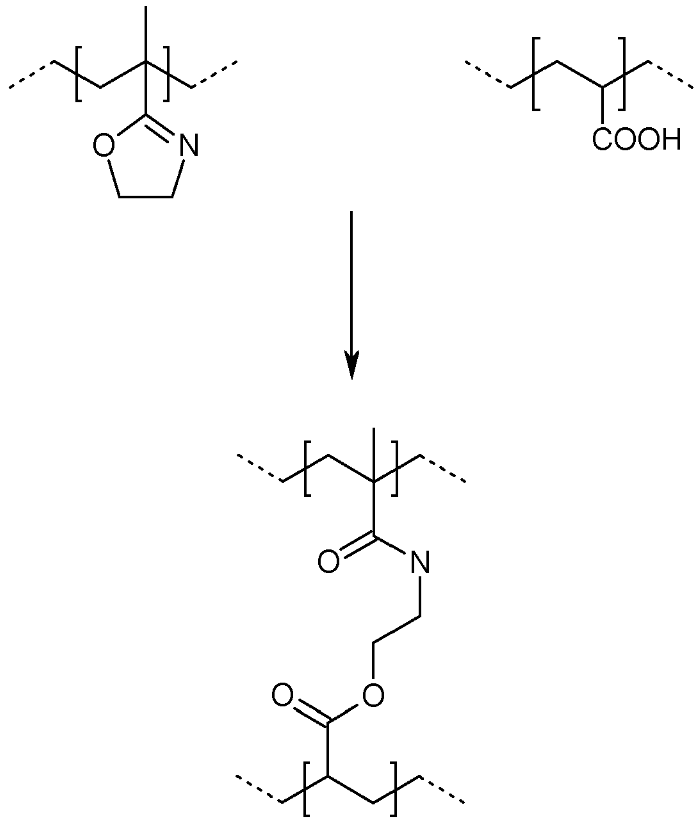

US 5,300,602 describes water-soluble polymers bearing oxazoline groups and optionally polyethylene glycol side chains. The polymers are obtained by copolymerizing a monomer mixture containing an oxazoline monomer, an acrylic or methacrylic alkyl ester and optionally a monomer having a polyethylene glycol group such as methyl polyethylene glycol acrylate or methacrylate. The polymers contain large amounts of the expensive oxazoline monomer. These polymers have the disadvantage in that they increase the water sensitivity of the polymer film.

Similar crosslinkers based on oxazoline-functionalized polymers, in particular 2-oxazoline functionalized copolymers are also commercially available, for example as Epocros® from Nippon Shokubai Co., Ltd, Japan.

WO 2015/197662 describe oxazoline-functionalized copolymers based on

- $C_{1-20}$ alkyl (meth)acrylates and/or $C_{8-20}$ vinyl aromatic (monomer a);
- monoethylenically unsaturated, hydrophilic monomers comprising at least one sulfonic acid group ($-SO_3M$) (monomer b); and
- monoethylenically unsaturated monomers comprising at least one oxazoline group (monomer c).

While these copolymers are water soluble, their aqueous solutions may become turbid or even instable upon longer storage, which is not accepted by customers. Moreover, the performance of the polymers with regard to crosslinking are not always satisfactory.

SUMMARY OF THE INVENTION

It is an object of the present invention to provide a water-soluble or water-dispersible polymer having oxazoline groups along the polymer backbone which overcomes the drawbacks of the oxazoline group bearing polymers of prior art. In particular, aqueous solutions of the polymers, in particular concentrated aqueous solutions containing more than 10 wt.-% of the polymer, should have improved storage stability. Moreover, the polymers should provide good crosslinking performance, i.e. they should provide good mechanical stability of polymer films when used as crosslinkers in combination with polymer latexes bearing carboxyl groups. Moreover, the polymer films containing the oxazoline group bearing polymers should have reduced sensitivity to moisture or water.

It was surprisingly found that these objectives are achieved by the copolymer as described herein.

Consequently, a first aspect of the present invention relates to water-soluble or water-dispersible copolymers

P, which are obtainable by copolymerizing a monomer composition of ethylenically unsaturated monomers M comprising

a) 50 to 92 wt.-%, in particular 53 to 87 wt.-%, especially 55 to 83 wt.-%, based on the total amount of monomers M, of at least one monoethylenically unsaturated monomer M.a selected from the group consisting of nonionic esters of methacrylic acid and $C_8$-$C_{20}$-vinyl aromatic monomers,
b) 3 to 30 wt.-%, in particular 5 to 25 wt.-%, especially 7 to 20 wt.-%, based on the total amount of monomers M, of at least one monoethylenically unsaturated monomer M.b which comprises at least one sulfonic acid group or a salt thereof,
c) 5 to 35 wt.-%, in particular 8 to 30 wt.-%, especially 10 to 25 wt.-%, based on the total amount of monomers M, of at least one monoethylenically unsaturated monomer M.c which comprises at least one oxazoline group,
d) less than 10 wt.-%, in particular at most 5 wt.-% and especially at most 1 wt.-%, based on the total amount of monomers M, of a monoethylenically unsaturated monomer M.d selected from the group consisting of $C_1$-$C_{20}$-alkylesters of acrylic acid,

where the copolymers P do essentially not contain copolymerized monomers bearing a carboxyl group and where the copolymers P have a glass transition temperature, as determined by differential scanning calorimetry according to ISO 11357-2:2013-05, of at most 90°C, in particular at most 85°C and especially at most 80°C.
A further aspect of the present invention relates to a process for preparing the copolymers P according to the invention. The process comprises a free radical polymerization of the monomer composition of monomers M, in particular a free radical solution polymerization.
A further aspect of the present invention relates to an aqueous solution or dispersion of the copolymer P according to the invention as well as a process for preparing such an aqueous solution or dispersion, which comprises a free radical polymerization of the monomer composition of monomers M and a subsequent step of dissolving the copolymer P in water.
A further aspect of the present invention relates to the use of the copolymers P for crosslinking a polyfunctional polymer, in particular a polymer latex, where the polyfunctional polymer, in particular the polymer latex, bears a plurality of carboxylic groups. The invention also relates to a method for crosslinking a polyfunctional polymer, in particular a polymer latex, bearing a plurality of carboxylic groups, which comprises combining the at least one copolymer P as defined herein and the polyfunctional polymer.
Further aspects of the present invention are aqueous compositions containing at least one copolymer P and at least one polyfunctional polymer in the form of an aqueous polymer dispersion, in particular an aqueous polymer latex, which bears a plurality of carboxylic groups, as well as the use of this aqueous composition as a binder.
The invention described herein provides several benefits:

- Aqueous solutions, in particular of concentrated aqueous solutions of the copolymers P have increased stability, in particular increased storage stability. In particular, they do not become turbid, form gel particles or show significant increase in viscosity.
- Copolymers P provide improved crosslinking performance, in particular improved mechanical stability of polymer films that contain a copolymer P and a polymer bearing a plurality of carboxyl groups, in particular a polymer latex bearing a plurality of carboxyl groups.

DETAILED DESCRIPTION OF THE INVENTION

Here and throughout the specification, the prefixes $C_n$-$C_m$ used in connection with compounds or molecular moieties each indicate a range for the number of possible carbon atoms that a molecular moiety or a compound can have.
The term "$C_1$-$C_n$ alkyl" denominates a group of linear or branched saturated hydrocarbon radicals having from 1 to n carbon atoms.
For example, the term $C_1$-$C_{20}$ alkyl denominates a group of linear or branched saturated hydrocarbon radicals having from 1 to 20 carbon atoms, while the term $C_1$-$C_4$ alkyl denominates a group of linear or branched saturated hydrocarbon radicals having from 1 to 4 carbon atoms. Examples of alkyl include but are not limited to methyl, ethyl, n-propyl, isopropyl, n-butyl, sec-butyl, isobutyl, tert-butyl, 2-methylpropyl (isopropyl), 1,1-dimethylethyl (tert-butyl), pentyl, 1-methylbutyl, 2-methylbutyl, 3-methylbutyl, 2,2-dimethylpropyl, 1-ethylpropyl, hexyl, 1,1-dimethylpropyl, 1,2-dimethylpropyl, 1-methylpentyl, 2-methylpentyl, 3-methylpentyl, 4-methylpentyl, 1,1-dimethylbutyl, 1,2-dimethylbutyl, 1,3-dimethylbutyl, 2,2-dimethylbutyl, 2,3-dimethylbutyl, 3,3-dimethylbutyl, 1-ethylbutyl, 2-ethylbutyl, 1,1,2-trimethylpropyl, 1,2,2-trimethylpropyl, 1-ethyl-1-methylpropyl, 1-ethyl-2-methylpropyl, heptyl, octyl, 2-ethylhexyl, nonyl, decyl, undecyl, dodecyl, tridecyl, tetradecyl, pentadecyl, hexadecyl, heptadecyl, octadecyl, nonadecyl, eicosyl, heneicosyl docosyl and their isomers. Examples of $C_1$-$C_4$-alkyl are for example methyl, ethyl, propyl, 1-methylethyl, butyl, 1-methylpropyl, 2-methylpropyl or 1,1-dimethylethyl.

The term $C_2$-$C_{20}$-alkenyl denominates a group of linear or branched hydrocarbon radicals having from 2 to 20 carbon atoms, in particular 2 to 4 carbon atoms, wherein at least one of the bonds between two adjacent carbon atoms of $C_2$-$C_{20}$-alkenyl is an ethylenically unsaturated double bond, preferably exactly one of the bonds between two adjacent carbon atoms of $C_2$-$C_{20}$-alkenyl is an ethylenically unsaturated double bond. Examples of $C_2$-$C_{20}$-alkenyl include, but are not limited to vinyl, 1-propenyl, 2-propen-1-yl (= allyl), 1-propen-2-yl (= isopropenyl), 3-buten-1-yl, 4-buten-1-yl and 2-methyl-2-propen-1-yl.

The term $C_5$-$C_{20}$ cycloalkyl means a saturated cyclic hydrocarbon radical, which is unsubstituted or bears one or more, e.g. 1, 2, 3 or 4 alkyl radicals, in particular $C_1$-$C_4$ alkyl radicals, the total number of the radical being from 5 to 20 carbon atoms. Examples of cycloalkyl include cyclopentyl, cyclohexyl, cycloheptyl, cyclooctyl, cyclododecyl, 4-methylcyclohexyl and 4-tert-butylcyclohexyl.

The term $C_6$-$C_{20}$-aryl denominates a mono- or polycyclic aromatic hydrocarbon radical having from 6 to 20 carbon atoms, where one ring may also be a fused saturated or unsaturated non-aromatic hydrocarbon ring. Examples include phenyl, naphthyl, indanyl indenyl, biphenyl, terphenyl, anthracenyl, fluorenyl, phenanthryl and the like.

The term $C_7$-$C_{32}$-arylalkyl denominates a group of linear or branched saturated hydrocarbon radicals having from 1 to 20 carbon atoms, in particular 1 to 4 carbon atoms, which bear one or more $C_6$-$C_{20}$-aryl radicals as defined above.

The term $C_1$-$C_{20}$-hydroxyalkyl, denominates a group of linear or branched saturated hydrocarbon radicals having from 1 to 20 carbon atoms, in particular 1 to 4 carbon atoms, which bear at least one hydroxyl group.

The term $C_1$-$C_{20}$-aminoalkyl denominates a group of linear or branched saturated hydrocarbon radicals having from 1 to 20 carbon atoms, in particular 1 to 4 carbon atoms, which bear at least one amino group.

The term $C_1$-$C_{20}$-haloalkyl denominates a group of linear or branched saturated hydrocarbon radicals having from 1 to 20 carbon atoms, in particular 1 to 4 carbon atoms, wherein one or more of the hydrogen atoms are replaced by a halogen atom, in particular by a chlorine or fluorine atom.

In this context a $C_8$-$C_{20}$-vinyl aromatic monomer is understood as a hydrocarbon monomer which bears a $C_2$-$C_4$ alkenyl group and a $C_6$-$C_{18}$-aryl radical such as phenyl or naphthyl, which is unsubstituted or bears one or more, e.g. 1, 2, or 3 alkyl groups, and which has a total of 8 to 20 carbon atoms. Examples of vinyl aromatic monomers include but are not limited to styrene, $\alpha$-methyl styrene, vinyl toluene, butyl styrene etc.

The term $C_2$-$C_4$-alkylene denominates a bivalent linear or branched saturated hydrocarbon radical having from 2 to 4 carbon atoms, such as ethanediyl, propanediyl and butanediyl, where the radicals, which are bound to $C_2$-$C_4$-alkylene are preferably bound to adjacent carbon atoms of $C_2$-$C_4$-alkylene, such as in 1,2-ethanediyl, 1,2-propanediyl, 1,2-butanediyl, 2,3-butanediyl, 2-methyl-1,2-propanediyl. $C_2$-$C_4$-alkylene also includes 1,3-propanediyl and 1,4-butanediyl.

The term phenyl-$C_2$-$C_4$-alkylene denominates $C_2$-$C_4$-alkylene, wherein one of the hydrogen atoms is replaced by a phenyl ring, such as in phenyl-1,2-ethanediyl.

The terms "wt.-%" and "% by weight" have the same meaning and are used synonymously.

Here and throughout the specification, the term "pphm" (parts per hundred monomers) is used as a synonym for the relative amount of a certain monomer to the total amount of monomer in % by weight.

Here and throughout the specification, the term "(meth)acryl" includes both acryl and methacryl groups. Hence the term "(meth)acrylate" includes acrylate and methacrylate and the term "(meth)acrylamide" includes acrylamide and methacrylamide.

Here and throughout the specification, the term "room temperature" means a temperature of about 22°C.

In the context of the present invention, the "water-soluble or water-dispersible copolymer" is understood that the copolymer forms a stable colloidal solution in water at standard conditions, i.e. in deionized water at 20°C and 1013 mbar.

In other words, in the context of the present invention, the term "water-soluble or water dispersible" is understood that the corresponding copolymer can be dissolved or dispersed in deionized water at 20°C and 1013 mbar in an amount of at least 10 g/L polymer such that the resulting aqueous solution has either no measurable particle size or a particle size of at most 50 nm as determined by dynamic light scattering in accordance with DIN 22412:2008. More particularly, the copolymer is water-soluble or water dispersible, i.e. if it can be dissolved or dispersed in deionized water at 20°C and 1013 mbar in an amount of at least 10 g/L, such that the resulting aqueous solution is virtually transparent or translucent, i.e. the turbidity of the solution, as expressed in NTU units (nephelometric turbity units), as determined in accordance with ISO 7027-1:2016, is at most 250, preferably at most 150, more preferably at most 100.

The water-soluble or water dispersible copolymer P is obtainable by copolymerizing a monomer composition of ethylenically unsaturated monomers M as defined herein. Accordingly, the polymer backbone is formed by repeating units of the respective monomers M, which comprise the combination of monomers M.a, M.b, and M.c and optionally M.d, if present.

Preferably, the monomer composition comprises the combination of monomers M.a, M.b, and M.c in an amount of at least 80 wt.-%, more preferably at least 90 wt.-%, more preferably at least 95 wt.-% especially at least 99 wt.-%, based on the total amount of monomers M and thus, based on the total amount of monomers M which form the copolymer

P.

According to the invention the monomer composition comprises at least one monoethylenically unsaturated monomer M.a. Monomer M.a is a non-ionic ester of methacrylic acid. Examples of non-ionic esters of methacrylic acid include, but are not limited to $C_1$-$C_{20}$ alkyl esters of methacrylic acid, hereinafter termed $C_1$-$C_{20}$ alkyl methacrylates, $C_5$-$C_{20}$ cycloalkyl esters of methacrylic acid, hereinafter termed $C_5$-$C_{20}$ cycloalkyl methacrylates and monomers of formula (III):

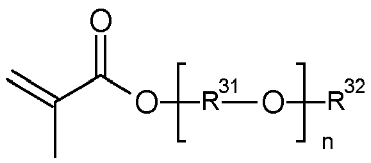

(III)

wherein $R^{31}$ represents $C_2$-$C_4$-alkylene or phenyl-$C_2$-$C_4$-alkylene, which in each repeating unit may be identical or different, n is an integer from 1 to 10, and $R^{32}$ is H or $C_1$-$C_{18}$-alkyl, in particular H or $C_1$-$C_4$-alkyl and especially H or methyl.

With respect to formula (III), the variables n, $R^{31}$ and $R^{32}$, either individually or in combination, have in particular the following meanings:

$R^{31}$ is selected from $-C_2H_4-$, $-C_3H_6-$ and $-C_4H_8-$, which in each repeating unit may be identical or different,
n is an integer from 4 to 8,
$R^{32}$ is H or $C_1$-$C_4$-alkyl, preferably H or methyl.

In a particular preferred embodiment, at least one group $R^{31}$ of formula (III) is $-C_3H_6-$ or $-C_4H_8-$. Thus, in case of n being an integer from 2 to 10 and in particular 4 to 8, the units $R^{31}$ are either a group selected from $-C_3H_6-$ and $-C_4H_8-$ and combinations thereof or a combination of at least one group $-C_3H_6-$ and/or at least one group $-C_4H_8-$ in combination with one or more further groups that are $-C_2H_4-$. In other words, this preferred embodiment does not include compounds of formula (III), in which $R^{31}$ is exclusively $-C_2H_4-$.

The monomer M.a is preferably selected from the group consisting of $C_1$-$C_{20}$-alkylesters of methacrylic acid and monomers of the formula (III) and mixtures thereof.

The at least one monoethylenically unsaturated monomer M.a is in particular selected from the group consisting of $C_1$-$C_{20}$-alkylesters of methacrylic acid, and monomers of the formula (III), wherein

$R^{31}$ is selected from $-C_2H_4-$, $-C_3H_6-$ and $-C_4H_8-$, which in each repeating unit may be identical or different, and where in particular at least one of $R^{31}$ is $-C_3H_6-$ and/or $-C_4H_8-$,
n is an integer from 4 to 8,
$R^{32}$ is H or $C_1$-$C_{10}$-alkyl, preferably H or $C_1$-$C_4$-alkyl and especially H or methyl.

The at least one monoethylenically unsaturated monomer M.a is even more preferably selected from the group consisting of $C_1$-$C_{20}$-alkylesters of methacrylic acid, in particular from the group consisting of $C_1$-$C_{16}$-alkylesters of methacrylic acid.

In a preferred group of embodiments, the monomers M.a are a combination of

- at least one monomer M.a1, which is selected from the group consisting of $C_6$-$C_{20}$-alkylesters of methacrylic acid and monomers of the formula (III),
- at least one monomer M.a2, which is selected from the group consisting of $C_1$-$C_5$-alkylesters of methacrylic acid.

Examples of suitable $C_6$-$C_{20}$-alkylesters of methacrylic acid include but are not limited to hexyl methacrylate, heptyl methacrylate, octyl methacrylate, 2-ethylhexyl methacrylate, nonyl methacrylate, decyl methacrylate, undecyl methacrylate, dodecyl methacrylate, tridecyl methacrylate, tetradecyl methacrylate, pentadecyl methacrylate, hexadecyl methacrylate, heptadecyl methacrylate, octadecyl methacrylate, nonadecyl methacrylate, eicosyl methacrylate, and the isomers thereof.

Examples of suitable monomers of the formula (III) include but are not limited to monoethylenglycol methacrylate (= 2-hydroxyethyl methacrylate, HEMA), diethylenglycol methacrylate, triethylenglycol methacrylate, tetraethylenglycol methacrylate, pentaethylenglycol methacrylate, hexaethylenglycol methacrylate, heptaethylenglycol methacrylate, octaethylenglycol methacrylate, monopropylenglycol methacrylate (= hydroxypropyl methacrylate), dipropylenglycol methacrylate, tripropylenglycol methacrylate, tetrapropylenglycol methacrylate, pentapropylenglycol methacrylate, hexapropylenglycol methacrylate, heptapropylenglycol methacrylate, octapropylenglycol methacrylate, monobutylenglycol methacrylate (= hydroxybutyl methacrylate), dibutylenglycol methacrylate, tributylenglycol methacrylate, tetrabutylenglycol methacrylate, pentabutylenglycol methacrylate, hexabutylenglycol methacrylate, heptabutylenglycol methacrylate, octabutylenglycol methacrylate,
methylethylenglycol methacrylate (= 2-methoxyethyl methacrylate), methyl diethylenglycol methacrylate, methyl triethylenglycol methacrylate, methyl tetraethylenglycol methacrylate, methyl pentaethylenglycol methacrylate, methyl hexaethylenglycol methacrylate, methyl heptaethylenglycol methacrylate, methyl octaethylenglycol methacrylate,
methyl propylenglycol methacrylate (= methoxypropyl methacrylate), methyl dipropylenglycol methacrylate, methyl tripropylenglycol methacrylate, methyl tetrapropylenglycol methacrylate, methyl pentapropylenglycol methacrylate, methyl hexapropylenglycol methacrylate, methyl heptapropylenglycol methacrylate, methyl octapropylenglycol methacrylate,
methyl butylenglycol methacrylate (= methoxybutyl methacrylate), methyl dibutylenglycol methacrylate, methyl tributylenglycol methacrylate, methyl tetrabutylenglycol methacrylate, methyl pentabutylenglycol methacrylate, methyl hexabutylenglycol methacrylate, methyl heptabutylenglycol methacrylate, methyl octabutylenglycol methacrylate,
the corresponding ethyl (poly)alkylenglycol methacrylates as well as the corresponding (poly)alkylenglycol methacrylates where the oxyalkylene repeating units are a combination of oxyethylene and oxypropylene units, a combination of oxyethylene and oxybutylene units, a combination of oxyethylene, oxypropylene and oxybutylene units units or combination of oxypropylene and oxybutylene units.

Amongst the aforementioned specific monomers of the formula (III), those are particularly preferred, where n is from 4 to 8 and the repeating units O-$R^{31}$ are oxypropylene, oxybutylene, a combination of oxyethylene and oxypropylene units, a combination of oxyethylene and oxybutylene units, a combination of oxyethylene, oxypropylene and oxybutylene units or combination of oxypropylene and oxybutylene units.

Examples of suitable $C_1$-$C_5$-alkylesters of methacrylic acid include but are not limited to methyl methacrylate, ethyl methacrylate, n-butyl methacrylate, isobutyl methacrylate, tert-butyl methacrylate, and pentyl methacrylate.

Examples of cycloalkyl methacrylates, in particular $C_5$-$C_{20}$ cycloalkyl methacrylates include, but are not limited to cyclopentyl methacrylate, cyclohexyl methacrylate, 4-methylcyclohexyl methacrylate and 4-tert-butylcyclohexyl methacrylate.

In this group of embodiments, the monomers M.a are in particular a combination of

i) at least one monomer M.a1 selected from the group consisting of $C_8$-$C_{16}$-alkylesters of methacrylic acid and monomers of the formula (III) and
ii) at least one monomer M.a2 selected from the group consisting of $C_1$-$C_3$-alkylesters of methacrylic acid.

In this group of embodiments, the monomer M.a1 is in particular selected from the group consisting of $C_8$-$C_{16}$-alkylesters of methacrylic acid and especially comprises lauryl methacrylate. More preferably, the monomer M.a1 is lauryl methacrylate.

In this group of embodiments, the monomer M.a2 preferably comprises methyl methacrylate. More preferably, the monomer M.a2 is methyl methacrylate.

Preferably, in case of a combination of monomers M.a1 and M.a2, the weight ratio of monomers M.a1 to M.a2 is in the range from 1:20 to 100:1, in particular in the range from 1:3 to 50:1.

In another group of embodiments, the monomers M.a are a single monomer, which is selected from the group consisting of $C_3$-$C_{20}$-alkylesters of methacrylic acid and monomers of the formula (III).

The at least one monomer M.a is preferably present in the monomer composition in an amount of 53 to 87 wt.-%, especially in an amount of 55 to 83 % wt.-%, based on the total amount of monomers M in the monomer composition forming the copolymer P.

The monomer M.b bears at least one sulfonic acid group and one ethylenically unsaturated double bond, e.g. a vinyl group or an allyl group. The copolymer may contain the polymerized units of the monomer M.b in the form of the free sulfonic acid or in the form of a salt thereof. Suitable salts are in particular the ammonium salts, alkali metal salts such as the sodium or potassium salts, and alkaline earth metal salts such as magnesium and/or calcium salt.

The monomer M.b is preferably selected from compounds of the formula (I),

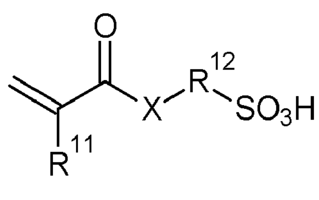

(I)

where

X is NH or O,
$R^{11}$ is hydrogen or methyl,
$R^{12}$ is selected from the group consisting of $C_1$-$C_{10}$-alkylene, phenylene, and $C_1$-$C_{10}$-alkylphenylene, and preferably selected from $C_2$-$C_{10}$-alkylene,

and the salts thereof, preferably the ammonium, sodium, potassium, magnesium and/or calcium salt thereof, especially the sodium or potassium salts thereof.

In particular, the monomer M.b is selected from the group consisting of 2-acrylamido-2-methylpropanesulfonic acid (AMPS), 2-methacrylamido-2-methylpropanesulfonic acid, 2-acrylamidobutanesulfonic acid, 3-acrylamido-3-methylbutanesulfonic acid, 2-acrylamido-2,4,4-trimethylpentanesulfonic acid, 2-sulfoethylmethacrylat, 3-sulfopropylmethacrylate and the salts thereof, in particular the ammonium, sodium, potassium, magnesium and/or calcium salt thereof, especially the sodium salt or potassium salt thereof.

Especially, the M.b is 2-acrylamido-2-propanesulfonic acid (AMPS) and/or a salt thereof, in particular 2-acrylamido-2-propanesulfonic acid sodium salt (AMPS-Na) or of a mixture consisting of at least 50% by weight AMPS and/or at least one salt thereof and at least one further monomer M.b as defined herein.

Examples of monomer M.b also include vinylsulfonic acid, styrenesulfonic acid and the salts thereof, in particular the ammonium, sodium, potassium, magnesium and/or calcium salt thereof.

The at least one monomer M.b is preferably present in the monomer composition in an amount of 5 to 25 wt.-%, especially in an amount of 7 to 20 % wt.-%, based on the total amount of monomers M in the monomer composition forming the copolymer P.

The at least one ethylenically unsaturated monomers M.c bears at least one, in particular exactly one oxazoline group and one ethylenically unsaturated double bond. Oxazoline groups are also named dihydrooxazole group. In the monomers M.c the oxazoline group is in particular a 4,5-dihydrooxazole group, which is represented by the following structural element.

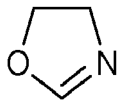

The monomer M.c is preferably selected from compounds of the formula (II),

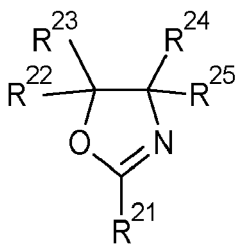

(II)

wherein

$R^{21}$ is a $C_2$-$C_{20}$-alkenyl radical, in particular a $C_2$-$C_4$-alkenyl radical,
$R^{22}$, $R^{23}$, $R^{24}$, $R^{25}$ are, independently from each other, selected from the group consisting of hydrogen, halogen, $C_1$-$C_{20}$-alkyl, $C_2$-$C_{20}$-alkenyl, $C_6$-$C_{20}$-aryl, $C_7$-$C_{32}$-arylalkyl, $C_1$-$C_{20}$-hydroxyalkyl, $C_1$-$C_{20}$-aminoalkyl, and $C_1$-$C_{20}$-haloalkyl.

$R^{21}$ is in particular selected from the group consisting of vinyl, allyl, 2-propen-2-yl (isopropenyl), 2-propen-1-yl, 3-buten-1-yl, or 4-buten-1-yl. More preferably, $R^{21}$ is vinyl or isopropenyl, especially isopropenyl.

$R^{22}$, $R^{23}$, $R^{24}$, $R^{25}$ are preferably, independently from each other, selected from the group consisting of hydrogen and $C_1$-$C_4$-alkyl, in particular from hydrogen and methyl.

Especially, the at least one monomer M.c is selected from the group consisting of 2-vinyl-2-oxazoline, 2-vinyl-4-methyl-2-oxazoline, 2-vinyl-5-methyl-2-oxazoline, 2-vinyl-4-ethyl-2-oxazoline, 2-vinyl-4,4-dimethyl-2-oxazoline, 2-vinyl-5,5-dimethyl-2-oxazoline, 2-vinyl-4,4,5,5-tetramethyl-2-oxazoline, 2-isopropenyl-2-oxazoline, 2-isopropenyl-4-methyl-2-oxazoline, 2-isopropenyl-5-methyl-2-oxazoline, 2-isopropenyl-4-ethyl-2-oxazoline, 2-isopropenyl-5-ethyl-2-oxazoline, 2-isopropenyl-4,4-dimethyl-2-oxazoline, 2-isopropenyl-5,5-dimethyl-2-oxazoline and 2-isopropenyl-4,4,5,5-tetramethyl-2-oxazoline. Particular preference is given to 2-vinyl-2-oxazoline and/or 2-isopropenyl-2-oxazoline, especially preferably 2-isopropenyl-2-oxazoline (iPOx).

The at least one monomer M.c is preferably present in the monomer composition in an amount of 8 to 30 wt.-%, especially in an amount of 10 to 25 % wt.-%, based on the total amount of monomers M in the monomer composition forming the copolymer P.

According to the invention, the monomer composition comprises less than 10 wt.-%, in particular at most 5 wt.-% and especially at most 1 wt.-%, based on the total amount of monomers M, of monomers M.d selected from the group consisting of $C_1$-$C_{20}$-alkylesters of acrylic acid. Such monomers M.d are for example methyl acrylate (MA), ethyl acrylate (EA), n-butyl acrylate (BA), octyl acrylate, lauryl acrylate and others. Without being bound to theory, it is believed that these monomers are susceptible to hydrolysis and thus may form free carboxyl groups upon storage, thereby imparting instability to aqueous solutions of the copolymer P. These carboxylic groups might react with oxazoline moieties, which might lead to an undesirable increase in molecular weight and crosslinking, which may hamper solubility or dispersibility of the copolymer in water and thus reduce its ability to efficiently act as crosslinker for polyfunctional polymers. In particular, the monomer composition of monomers M which form the copolymer P does not comprise any monomer M.d.

The monomer composition does essentially not comprise any monomer bearing a free carboxyl group i.e. a group COOH or a salt thereof, such as monoethylenically unsaturated mono- or dicarboxylic acids such as acrylic acid, methacrylic acid, fumaric acid, itaconic acid, maleic acid and the like. In other words, in the monomer composition used for preparing the copolymer P the amount of monomers which bear carboxyl groups is less than 0.1 wt.-% and in particular 0 wt.-%, based on the total amount of monomers M in the monomer composition forming the copolymer P.

The monomer composition may also comprise further ethylenically unsaturated monomers M.e that are different from monomers M.a, M.b, M.c, and M.d. The amount of monomers M.e in the monomer composition is usually less than 10 wt.-%, in particular at most 5 wt.-% and especially at most 1 wt.-%, based on the total amount of monomers M.

Those monomers M.e are preferably selected from the group consisting of

- primary amides of monoethylenically unsaturated monocarboxylic acids having 3 to 8 carbon atoms (monomers M.e1), such as acrylamide and methacrylamide;
- N-$C_1$-$C_{10}$ alkyl amides and N,N-di-$C_1$-$C_{10}$ alkyl amides of monoethylenically unsaturated monocarboxylic acids having 3 to 6 carbon atoms (monomers M.e2), such as N-$C_1$-$C_{10}$ alkyl amides and N,N-di-$C_1$-$C_{10}$ alkyl amides of acrylic acid or methacrylic acid, such as N-methyl acrylamide, N,N-dimethyl acrylamide, N-ethyl acrylamide, N-propyl acrylamide, N-isopropyl acrylamide, N-butyl acrylamide, N-methyl methacrylamide, N-ethyl methacrylamide, N-propyl methacrylamide, N-isopropyl methacrylamide and N-butyl methacrylamide;
- non-ionic vinyl esters and ethers (monomers M.e3), e.g. vinyl formate, vinyl acetate, vinyl propionate, methyl vinyl ether, ethyl vinyl ether, hydroxyvinyl ethyl ether, hydroxy vinyl propyl ether, hydroxyvinyl n-butyl ether,
- N-vinyl amides (monomers M.e4), e.g. N-vinylformamide, N-vinylacetamide, N-vinylpyrrolidone or N-vinylcaprolactam;
- monoethylenically unsaturated nitriles (monomers M.e5), such as acryl nitrile and methacryl nitrile;
- multiethylenically unsaturated monomers (monomers M.e6), i.e. monomers having 2 or more ethylenically unsaturated double bonds, and

mixtures of two or more of the aforementioned monomers M.e1 to M.e6.

Frequently, the monomer composition forming the copolymer P does not contain any multiethylenically unsaturated monomers M.e6.

Preferably, the monomer composition comprises to at least 99% or consists of

a) 50 to 92 wt.-%, in particular 53 to 87 wt.-%, especially 55 to 83 wt.-%, based on the total amount of monomers M, of at least one monoethylenically unsaturated monomer M.a, which is selected from the group consisting of $C_1$-$C_{20}$-alkylesters of methacrylic acid, and monomers of the formula (III), wherein,

$R^{31}$ is selected from -$C_2H_4$-, -$C_3H_6$-, and -$C_4H_8$-, which in each repeating unit may be identical or different, and where in particular at least one of $R^{31}$ is - $C_3H_6$- and/or -$C_4H_8$-,

n is an integer from 4 to 8,

$R^{32}$ is H or $C_1$-$C_4$-alkyl and preferably H or methyl,

b) 3 to 30 wt.-%, in particular 5 to 25 wt.-%, especially 7 to 20 wt.-%, based on the total amount of monomers M, of at least one monoethylenically unsaturated monomer M.b of the formula (I) or a salt thereof,

c) 5 to 35 wt.-%, in particular 8 to 30 wt.-%, especially 10 to 25 wt.-%, based on the total amount of monomers M, of at least one monoethylenically unsaturated monomer M.c of the formula (II),

d) optionally at most 5 wt.-% and especially at most 1 wt.-%, based on the total amount of monomers M, of a

monoethylenically unsaturated monomer M.d selected from the group consisting of $C_1$-$C_{20}$-alkylesters of acrylic acid.

In particular, the monomer composition comprises to at least 99% or consists of

a) 50 to 92 wt.-%, in particular 53 to 87 wt.-%, especially 55 to 83 wt.-%, based on the total amount of monomers M, of at least one monoethylenically unsaturated monomer M.a, which is selected from the group consisting of $C_1$-$C_{20}$-alkylesters of methacrylic acid, in particular from the group consisting of $C_1$-$C_{16}$-alkylesters of methacrylic acid;
b) 3 to 30 wt.-%, in particular 5 to 25 wt.-%, especially 7 to 20 wt.-%, based on the total amount of monomers M, of at least one monoethylenically unsaturated monomer M.b of the formula (I) or a salt thereof, which is selected from the group consisting of 2-acrylamindo-2-methylpropanesulfonic acid (AMPS), 2-methacrylamido-2-methylpropanesulfonic acid, 2-acrylamidobutanesulfonic acid, 3-acrylamido-3-methylbutanesulfonic acid, 2-acrylamido-2,4,4-trimethylpentanesulfonic acid, 2-sulfoethylmethacrylate, 3-sulfopropylmethacrylate and the salts thereof,
c) 5 to 35 wt.-%, in particular 8 to 30 wt.-%, especially 10 to 25 wt.-%, based on the total amount of monomers M, of at least one monoethylenically unsaturated monomer M.c of the formula (II), wherein $R^{21}$ is preferably isopropenyl and $R^{22}$, $R^{23}$, $R^{24}$, $R^{25}$ are, independently from each other, preferably selected from the group consisting of hydrogen and $C_1$-$C_4$-alkyl, in particular from hydrogen and methyl, where M.c is in particular 2-vinyl-2-oxazoline and/or 2-isopropenyl-2-oxazoline, especially 2-isopropenyl-2-oxazoline;
d) at most 5 wt.-% and especially at most 1 wt.-%, based on the total amount of monomers M, of a monoethylenically unsaturated monomer M.d selected from the group consisting of $C_1$-$C_{20}$-alkylesters of acrylic acid.

In a particular group 1 of embodiments, the monomer composition comprises to at least 99% or consists of

a) 50 to 92 wt.-%, in particular 53 to 87 wt.-%, especially 55 to 83 wt.-%, based on the total amount of monomers M, of at least one monoethylenically unsaturated monomer M.a, which is a combination of at least one monomer M.a1 and at least one monomer M.a2;
b) 3 to 30 wt.-%, in particular 5 to 25 wt.-%, especially 7 to 20 wt.-%, based on the total amount of monomers M, of at least one monoethylenically unsaturated monomer M.b of the formula (I) or a salt thereof,
c) 5 to 35 wt.-%, in particular 8 to 30 wt.-%, especially 10 to 25 wt.-%, based on the total amount of monomers M, of at least one monoethylenically unsaturated monomer M.c of the formula (II), wherein $R^{21}$ is preferably isopropenyl and $R^{22}$, $R^{23}$, $R^{24}$, $R^{25}$ are, independently from each other, preferably selected from the group consisting of hydrogen and $C_1$-$C_4$-alkyl, in particular from hydrogen and methyl, where M.c is in particular 2-vinyl-2-oxazoline and/or 2-isopropenyl-2-oxazoline, especially 2-isopropenyl-2-oxazoline;
d) optionally at most 5 wt.-% and especially at most 1 wt.-%, based on the total amount of monomers M, of a monoethylenically unsaturated monomer M.d selected from the group consisting of $C_1$-$C_{20}$-alkylesters of acrylic acid.

In a preferred particular group 2 of embodiments, the monomer composition comprises to at least 99% or consists of

a) 50 to 92 wt.-%, in particular 53 to 87 wt.-%, especially 55 to 83 wt.-%, based on the total amount of monomers M, of at least one monoethylenically unsaturated monomer M.a, which is a combination of at least one monomer M.a1 and at least one monomer M.a2;
b) 3 to 30 wt.-%, in particular 5 to 25 wt.-%, especially 7 to 20 wt.-%, based on the total amount of monomers M, of at least one monoethylenically unsaturated monomer M.b of the formula (I) or a salt thereof, which is selected from the group consisting of 2-acrylamindo-2-methylpropanesulfonic acid (AMPS), 2-methacrylamido-2-methylpropanesulfonic acid, 2-acrylamidobutanesulfonic acid, 3-acrylamido-3-methylbutanesulfonic acid, 2-acrylamido-2,4,4-trimethylpentanesulfonic acid, 2-sulfoethylmethacrylate, 3-sulfopropylmethacrylate and the salts thereof,
c) 5 to 35 wt.-%, in particular 8 to 30 wt.-%, especially 10 to 25 wt.-%, based on the total amount of monomers M, of at least one monoethylenically unsaturated monomer M.c of the formula (II), wherein $R^{21}$ is preferably isopropenyl and $R^{22}$, $R^{23}$, $R^{24}$, $R^{25}$ are, independently from each other, preferably selected from the group consisting of hydrogen and $C_1$-$C_4$-alkyl, in particular from hydrogen and methyl, where M.c is in particular 2-vinyl-2-oxazoline and/or 2-isopropenyl-2-oxazoline, especially 2-isopropenyl-2-oxazoline;
d) at most 5 wt.-% and especially at most 1 wt.-%, based on the total amount of monomers M, of a monoethylenically unsaturated monomer M.d selected from the group consisting of $C_1$-$C_{20}$-alkylesters of acrylic acid.

In an even more preferred particular group 3 of embodiments, the monomer composition comprises to at least 99% or consists of

a) 50 to 92 wt.-%, in particular 53 to 87 wt.-%, especially 55 to 83 wt.-%, based on the total amount of monomers M, of at least one monoethylenically unsaturated monomer M.a, which is a combination of at least one monomer M.a1 and at least one monomer M.a2;
b) 3 to 30 wt.-%, in particular 5 to 25 wt.-%, especially 7 to 20 wt.-%, based on the total amount of monomers M, of at least one monoethylenically unsaturated monomer M.b of the formula (I) or a salt thereof, which is selected from the group consisting of 2-acrylamindo-2-methylpropanesulfonic acid (AMPS) and the salts thereof,
c) 5 to 35 wt.-%, in particular 8 to 30 wt.-%, especially 10 to 25 wt.-%, based on the total amount of monomers M, of at least one monoethylenically unsaturated monomer M.c of the formula (II), wherein $R^{21}$ is isopropenyl and $R^{22}$, $R^{23}$, $R^{24}$, $R^{25}$ are hydrogen;
d) at most 5 wt.-% and especially at most 1 wt.-%, based on the total amount of monomers M, of a monoethylenically unsaturated monomer M.d selected from the group consisting of $C_1$-$C_{20}$-alkylesters of acrylic acid.

In these particular groups 1, 2 and 3 of embodiments, the monomers M.a are in particular a combination of

i) at least one monomer M.a1 selected from the group consisting of $C_8$-$C_{16}$-alkylesters of methacrylic acid and monomers of the formula (III) with particular preference given to monomers M.a1, which are selected from the group consisting of $C_8$-$C_{16}$-alkylesters of methacrylic and
ii) at least one monomer M.a2 selected from the group consisting of $C_1$-$C_3$-alkylesters of methacrylic acid.

In these particular groups 1, 2 and 3 of embodiments, the monomer M.a1 is in particular selected from the group consisting of $C_8$-$C_{16}$-alkylesters of methacrylic acid and especially comprises lauryl methacrylate. More preferably, the monomer M.a1 is lauryl methacrylate.

In these particular groups 1, 2 and 3 of embodiments, the monomer M.a2 preferably comprises methyl methacrylate. More preferably, the monomer M.a2 is methyl methacrylate.

In these particular groups 1, 2 and 3 of embodiments, the weight ratio of monomers M.a1 to M.a2 is preferably in the range from 1:20 to 100:1, in particular in the range from 1:3 to 50:1 or in the range from 1:4 to 50:1.

The copolymer P preferably has a number average molecular weight Mn, as determined by gel permeation chromatography, in the range of 2000 to 30000 g/mol, in particular in the range of 3000 to 15000 g/mol.

The copolymer P preferably has a weight average molecular weight Mw, as determined by gel permeation chromatography, in the range of 10000 to 50000 g/mol, in particular in the range of 10000 to 30000 g/mol.

As used herein, the term gel permeation chromatography (GPC) refers to size exclusion chromatography according to DIN 55672-2:2008:06, using commercial polymethylmethacrylate standards and tetrahydrofuran (THF) as eluent.

According to the invention, the copolymer P has a glass transition temperature, as determined by differential scanning calorimetry, of at most 90°C according to ISO 11357-2:2013-05. The glass transition temperature as referred to herein is determined by the DSC method (differential scanning calorimetry) using preferably a heating rate of 20 K/min and applying the midpoint measurement in accordance with ISO 11357-2:2013-05, preferably with sample preparation in accordance with DIN EN ISO 16805:2005-07. Preferably, the glass transition temperature is at most 85°C, in particular at most 80°C and especially at most 75°C or at most 70°C, e.g. in the range from 0 to 90°C, in particular in the range from 5 to 85°C or from 10 to 80°C and especially in the range 10 to 75°C or 10 to 70°C.

The comparatively low glass transition temperature is beneficial for the capability of the polymers to act as crosslinker for polyfunctional polymers, as a low glass transition temperature is associated with an increased mobility/flexibility of the polymer chain.

The glass transition temperature might also be calculated from the monomer composition by the Fox equation:

$$1/Tg = x_1/Tg_1 + x_2/Tg_2 + .... x_n/Tg_n,$$

In this equation $x_1$, $x_2$, ... $x_n$ are the mass fractions of the monomers 1, 2, .... n and $Tg_1$, $Tg_2$, ... $Tg_n$ are the glass transition temperatures in Kelvin of the homopolymers synthesized from only one of the monomers 1, 2, .... n at a time. The Fox equation is described by T. G. Fox in Bull. Am. Phys. Soc. 1956, 1, page 123 and as well as in Ullmann's Encyclopädie der technischen Chemie [Ullmann's Encyclopedia of Industrial Chemistry], vol. 19, p. 18, 4th ed., Verlag Chemie, Weinheim, 1980. The Tg values for the homopolymers of most monomers are known and listed, for example, in Ullmann's Encyclopädie der technischen Chemie [Ullmann's Encyclopedia of Industrial Chemistry], 5th ed., vol. A21, p. 169, Verlag Chemie, Weinheim, 1992. Further sources of glass transition temperatures of homopolymers are, for example, J. Brandrup, E. H. Immergut, Polymer Handbook, 1st Ed., J. Wiley, New York 1966, 2nd Ed. J. Wiley, New York 1975, 3rd Ed. J. Wiley, New York 1989 and 4th Ed. J. Wiley, New York 2004.

For the calculation of the theoretical glass transition temperature of the copolymers of the present invention by the Fox equation, a glass transition temperature of the homopolymer of 2-isopropanol-2-oxazoline (iPOx) of 260°C is assumed. This value is based on own calculations/extrapolations from experimental data, i.e. from the experimentally determined glass transition temperature of copolymers of iPOx with monomers M.a, such as methyl methacrylate, and M.b, such as 2-acrylamido-2-methylpropane sulfonic acid.

The (theoretical) glass transition temperature of the polymer can by adjusted by choosing proper monomers $M_1$, $M_2$ ... $M_n$ and their mass fractions $x_1$, $x_2$, .... $x_n$ in the monomer composition so to arrive at the desired glass transition temperature Tg. It is common knowledge for a skilled person to choose the proper amounts of monomers $M_1$, $M_2$ ... $M_n$ for obtaining a copolymer and/or copolymer phase with the desired glass transition temperature.

A further aspect of the present invention is a process for preparing the copolymer P, comprising a free radical polymerization of the monomer composition of monomers M. The term free radical polymerization is understood that the polymerization of the monomer composition is performed in the presence of a polymerization initiator, which, under polymerization conditions, forms radicals, either be thermal decomposition or by a redox reaction. A skilled person is conversant with free radical polymerizations which are well described in the art, e.g. in "Polymer Chemistry" by S. Koltzenburg, M. Maskos, O. Nuyken (Springer-Verlag 2017) and literature cited therein. Principally, the process can be conducted by analogy to the process described in WO 2015/197662.

Preferably, the process for preparing the copolymer P, thus the polymerization of the invention, is carried out as free radical solution polymerization. A solution polymerization means that a solution of the monomers in a solvent, which is capable of dissolving the copolymer are polymerized by a free radical polymerization, i.e. in the presence of a polymerization initiator.

Suitable solvents for performing the solution polymerization are water, polar organic solvents and mixtures thereof with water. Suitable polar organic solvents are those, which are at least partially miscible with water and which preferably are miscible with water to an extent of at least 100 g/L at 20°C and ambient pressure. Suitable organic solvents include, but are not limited to $C_1$-$C_4$-alkanols, such as methanol, ethanol, propanol, isopropanol (= 2-propanol), n-butanol, sec-butanol (= 2-butanol) or isobutanol, dimethyl sulfoxide, ethyl acetate. Preferred organic solvents are selected from $C_1$-$C_4$-alkanols, such as methanol, ethanol, propanol, isopropanol, n-butanol, sec-butanol or isobutanol, preferably isopropanol or sec-butanol. In particular, solvents for performing the solution polymerization are selected from mixtures of at least one polar organic solvent with water, in particular form mixtures of one or more $C_1$-$C_4$-alkanols and water. In these mixtures, the weight ratio of organic solvent to water is preferably in the range of 1:3 to 3:1, in particular in the range of 1:2 to 2:1. Preferably, the solvent used is a mixture of water and at least one $C_1$-$C_4$-alkanol, which is preferably selected from methanol, ethanol n-propanol, isopropanol and sec-butanol, especially isopropanol or sec-butanol, in the weight ratio in the range of 1:3 to 3:1, in particular in the range of 1:2 to 2:1.

If the polymerization reaction is conducted as a solution polymerization the concentration of the monomers in the polymerization reaction may vary. In particular, the weight ratio of the monomers and the solvent will be in the range from 1:20 to 1.2:1, in particular in the range from 1:10 to 1:1 and especially in the range from 1:8 to 1:1.5.

The polymerization of the invention is usually triggered by means of a free-radical polymerization initiator (free-radical initiator). These may in principle be peroxides or azo compounds. Of course, redox initiator systems may also be used.

Suitable peroxides may, in principle, be inorganic peroxides, such as hydrogen peroxide or peroxodisulfates, such as the mono- or di-alkali metal or ammonium salts of peroxodisulfuric acid, for example the mono- and disodium, -potassium or ammonium salts, or organic peroxides, e.g. peroxy acids and esters of peroxy acids such as diisopropyl peroxydicarbonate, t-amyl perneodecanoate, t-butyl perneodecanoate, t-butyl perpivalate, t-amyl perpivalate, bis(2,4-dichlorobenzoyl) peroxide, diisononanoyl peroxide, didecanoyl peroxide, dioctanoyl peroxide, dilauroyl peroxide, bis(2-methylbenzoyl) peroxide, disuccinoyl peroxide, diacetyl peroxide, dibenzoyl peroxide, t-butyl per-2-ethylhexanoate, t-butyl-2-ethylhexanoate, bis(4-chlorobenzoyl) peroxide, t-butyl perisobutyrate, t-butyl permaleate, 1,1-bis(t-butyl peroxy)cyclohexane, t-butyl peroxyisopropylcarbonate, t-butyl perisononanoate, t-butyl peracetate, t-amyl perbenzoate, 3-(t-butylperoxy)-3-phenylphthalide or t-butyl perbenzoate, alkyl and cycloalkyl peroxides such as 1,1-bis(t-butyl peroxy)-3,5,5-trimethylcyclohexane, 2,2-bis(t-butylperoxy)butane (di-t-butyl peroxide), 2,2-bis-10-(t-butylperoxy)propane, 2,5-dimethyl-2,5-bis(t-butylperoxy)hexane, di(t-amyl) peroxide, $\alpha,\alpha'$-bis(t-butylperoxyisopropyl)benzene, 3,5-bis(t-butylperoxy)-3,5-dimethyl-1,2-dioxolane, di(t-butyl) peroxide, 2,5-dimethyl-2,5-bis(t-butylperoxy)hexyne, 3,3,6,6,9,9-hexamethyl-1,2,4,5-tetraoxacyclononane, p-menthane hydroperoxide, pinane hydroperoxide, aromatic peroxides such as dicumyl peroxide, diisopropylbenzene, mono-$\alpha$-hydroperoxide or cumene hydroperoxide. A suitable peroxide may also be hydrogen peroxide.

Typical azo initiators are, for example, 4,4'-azobis-4-cyanovaleric acid (ACVA), 2,2'-azobis(2-methylpropionamidine) dihydrochloride, 2,2'-azobis(2-methylpropionitrile) (AIBN), 2,2'-azobis(2-methylbutanenitrile), 2,2'-azobis(2,4-dimethylvaleronitrile), 1,1'-azobis(cyanocyclohexane), 1,1'-azobis(N,N-dimethylformamide), 2,2'-azobis(2-methylbutyronitrile), 2,2'-azobis(4-methoxy-2,4-dimethylvaleronitrile), 2,2'-azobis(2,4,4-trimethylpentane), 2,2'-azobisisobutyronitrile, 2,2'-azobis(2-methylbutyronitrile), 2,2'-azobis(2,4-dimethylvaleronitrile), 2,2'-azobis(4-methoxy-2,4-dimethylvaleronitrile), 1,1'-azobis(1-cyclohexanecarbonitrile), 2,2'-azobis(isobutyramide) dihydrate, 2-phenylazo-2,4-dimethyl-4-methoxyvaleronitrile, dimethyl 2,2'-azobisisobutyrate, 2-(carbamoylazo)isobutyronitrile, 2,2'-azobis(2,4,4-trimethylpentane), 2,2'-azobis(2-methyl propane), 2,2'-azobis(N,N'-dimethyleneisobutyramidine), 2,2'-azobis(N,N'-dimethyleneisobutyramidine) hydrochloride, 2,2'-azobis(2-amidinopropane), 2,2'-azobis(2-amidinopropane) hydrochloride, 2,2'-azobis(2-methyl-N-[1,1-bis(hydroxymethyl)ethyl]propionamide), azobis(2-amidopropane) dihydrochloride or 2,2'-azobis(2-methyl-N[1,1-bis(hydroxymethyl)-2-hydroxyethyl]propionamide).

Typical redox initiators are, for example, mixtures of an oxidizing agent, such as hydrogen peroxide, peroxodisulfates or aforementioned peroxide compounds, and a reducing agent. Corresponding reducing agents which may be used are sulfur compounds with a low oxidation state, such as alkali metal sulfites, for example potassium and/or sodium sulfite, alkali metal hydrogensulfites, for example potassium and/or sodium hydrogensulfite, alkali metal metabisulfites, for example potassium and/or sodium metabisulfite, formaldehydesulfoxylates, for example potassium and/or sodium formaldehydesulfoxylate, alkali metal salts, specifically potassium and/or sodium salts of aliphatic sulfinic acids and alkali metal hydrogensulfides, for example potassium and/or sodium hydrogensulfide, salts of polyvalent metals, in particular Co(II) salts and Fe(II) salts, such as iron(II) sulfate, iron(II) ammonium sulfate or iron(II) phosphate, but also dihydroxymaleic acid, benzoin and/or ascorbic acid, and reducing saccharides, such as sorbose, glucose, fructose and/or dihydroxyacetone.

Preferred free radical initiators are in particular azo compounds, in particular azobis(isobutyronitril) (AIBN) 2,2'-azobis(2-methylpropionamidine) dihydrochloride, and 2,2'-azobis(N,N'-dimethyleneisobutyramidine) dihydrochloride.

In general, the amount of the free-radical initiator used, based on the total amount of monomers M, is 0.01 to 5 pphm, preferably 0.1 to 3 pphm.

The polymerization of the invention can optionally be conducted in the presence of chain transfer agents. Chain transfer agents are understood to mean compounds which transfer free radicals and which reduce the molecular weight and/or control chain growth in the polymerization. Suitable chain transfer agents are known to skilled persons and are well described in literature such as Polymer Handbook, 3rd edition, 1989, J. Brandrup and E.H. Immergut, John Wiley & Sons.

The process for producing the copolymer P is preferably carried out in a manner that the copolymer has a number average molecular weight, as determined by gel permeation chromatography, in the range of 2000 to 50000 g/mol, in particular in the range of 3000 to 25000 g/mol. The number average molecular weight can be manipulated by using proper amounts of polymerization initiator or by the amount of the chain regulator, taking into account that the solvent used in the polymerization of the monomer composition may also affect the molecular weight of the resulting copolymer in a known manner. A skilled person can find out by routine how to affect the molecular weight by the reaction conditions of the polymerization reaction.

The polymerization of the invention is usually conducted at temperatures in the range from 0 to 170°C. Temperatures employed are frequently in the range from 30 to 120°C, in particular in the range from 50 to 120°C and especially in the range from 60 to 110°C.

The polymerization of the invention can be carried out at a pressure of less than, equal to or greater than 1 atm (atmospheric pressure), and so the polymerization temperature may exceed 100°C and may be up to 170°C. Polymerization of the monomers is normally performed at ambient pressure but it may also be performed under elevated pressure. In this case, the pressure may assume values of 1.2, 1.5, 2, 5, 10, 15 bar (absolute) or even higher values. If emulsion polymerizations are conducted under reduced pressure, pressures of 950 mbar, frequently of 900 mbar and often 850 mbar (absolute) are established. Advantageously, the free-radical polymerization of the invention is conducted at ambient pressure (about 1 atm) with exclusion of oxygen, for example under an inert gas atmosphere, for example under nitrogen or argon.

The polymerization of the monomer composition can be polymerized e.g. by a batch or semi-batch procedure or by a continuous procedure.

In the batch procedure, the monomers to be polymerized and optionally the solvent used in the polymerization procedure is charged to a reaction vessel while the majority or the total amount of the polymerization initiator is added to the reaction vessel in the course of the polymerization. In a semi batch procedure, at least a portion or the total amount of the polymerization initiator and solvent and optionally a small portion of the monomers are charged to the reaction vessel and the majority of monomers to be polymerized are added to the reaction vessel in the course of the polymerization. In a continuous process the monomers and polymerization initiator and optionally the solvent are continuously added to a reaction vessel and the obtained polymer is continuously discharged from the polymerization vessel.

Preferably, the polymerization of the monomer composition is conducted as a semi-batch procedure. In particular at least 90% of the monomers to be polymerized are added to the reaction vessel in the course of the polymerization reaction.

Further preferred embodiments of the process for producing the copolymer P are those mentioned herein, in particular those that are described with respect to the copolymer P hereinabove.

The copolymer P can typically be isolated from the resulting polymerization mixture by means of relatively

customary methods, e.g. by means of precipitation or distillation. However, it is also possible to transfer the copolymers A into water by means of steam distillation and to use them in the form of an aqueous solution as crosslinkers.

A further aspect of the present invention is an aqueous solution or dispersion of the copolymer P as defined herein. In the context of the present invention, the term "aqueous solution or dispersion" is understood to include stable colloidal solutions of the copolymer in water at standard conditions, i.e. in deionized water at 20°C and 1013 mbar. In other words, in the context of the present invention, the term "aqueous solution or dispersion" is understood that the obtained polymer is present dissolved or dispersed form such that the copolymer P is present either in molecularly dissolved form or in the form of small aggregates which have either no measureable particle size or a particle size of at most 50 nm as determined by dynamic light scattering in accordance with DIN 22412:2008. More particularly, the resulting aqueous solution containing the copolymer P in an amount of at least 10g/L in deionized water at 20°C and 103 mbar is virtually transparent or translucent, i.e. the turbidity of the solution, as expressed in NTU units (nephelometric turbity units), as determined in accordance with ISO 7027-1:2016, is at most 250, preferably at most 150, more preferably at most 100.

Besides the copolymer P, the aqueous solution contains an aqueous solvent. An aqueous solvent is understood as water or a mixture of water with a water-miscible organic solvent, wherein the amount of water is at least 90 vol.-%, in particular at least 95 vol.-%, based on the total amount of solvent. In particular, the concentration of the copolymer P in the solution is usually in the range from 10 to 50 wt.-%, in particular in the range from 15 to 40 wt.-%. The pH of the aqueous solution at 20°C is preferably in the range from 6 to 10, in particular in the range from 7.5 to 9.5.

Besides the copolymer P and the solvent, the aqueous solution may contain further ingredients, e.g. ingredients resulting from the polymerization reaction, such as small amounts of the decomposition products of the polymerization initiator or the chain regulator. Apart from that, the aqueous solution may contain further additives frequently used in in aqueous solutions of polymers, e.g. stabilizers against chemical degradation and biocides for stabilization of the solution against infestation with microorganisms.

A further aspect of the present invention is the use of a copolymer P for crosslinking a polyfunctional polymer bearing a plurality of carboxyl groups. In the context of the present invention, the polyfunctional polymer bearing a plurality of carboxyl groups comprises on average at least 2 carboxyl groups, in particular at least 3 or at least 5 carboxyl groups of the formula COOH per polymer chain. The carboxyl groups may be present in acidic or neutralized form. The carboxyl groups are preferably present in at least partially neutralized or completely neutralized form. In particular at least 90% or all of the carboxyl groups of the polyfunctional polymer are present in neutralized form. The molar amount of carboxyl groups in the polyfunctional polymer is usually in the range from 0.01 to 2.8 mol/kg, in particular in the range from 0.03 to 2.0 mol/kg and especially in the range from 0.05 to 1.4 mol/kg. Preferably, the polyfunctional polymer is neutralized by a volatile base such as ammonia, ethanol amine, N,N-dimethyl ethanol amine, N,N-diethyl ethanol amine, triethyl amine, N,N-diisopropyl ethylamine (=*N*-ethyl-*N*-(propan-2-yl)propan-2-amine; Hünig's base), 2-aminopropanol, 2-amino-2-methyl-1-propanol or 2-amino-1-butanol, with particular preference given to ammonia.

Without being bound to theory, it is assumed that the oxazoline moieties of the polymer P react with the carboxylic groups of the polyfunctional polymer after film formation to form a covalent bond as described in scheme 1 above.

The polyfunctional polymer is usually film forming and frequently displays at least one glass transition temperature or melting point, which will depend on the desired purpose. Usually the polyfunctional polymer displays a glass transition temperature $T_g$ or melting point the range from -60 to +130°C and frequently in the range from -50 to +100°C. If the polymer contains two or more different polymers having different glass transition temperatures and/or melting points, e.g. in case of a mixture of two or more polymers or in case of multi-stage polymer dispersions or hybrid dispersions, at least one of the glass transition temperatures and/or melting points is in the above ranges.

The polyfunctional polymer may be an aqueous polymer solution or is preferably present as an aqueous polymer dispersion. In the aqueous polymer dispersion, the dispersed polymers are in the form of polymer particles. The polymer particles typically have a Z average diameter D in the range from 20 to 1000 nm, in particular in the range from 30 to 500 nm and especially in the range from 40 to 350 nm. If not stated otherwise, the size of the particles as well as the distribution of particle size is determined by quasielastic light scattering (QELS), also known as dynamic light scattering (DLS). The measurement method is described in the ISO 13321:1996 standard. The determination can be carried out using a High-Performance Particle Sizer (HPPS). For this purpose, a sample of the aqueous polymer dispersion will be diluted and the dilution will be analyzed. In the context of DLS, the aqueous dilution may have a polymer concentration in the range from 0.001 to 0.5% by weight, depending on the particle size. For most purposes, a proper concentration will be 0.01% by weight. However, higher or lower concentrations may be used to achieve an optimum signal/noise ratio. The dilution can be achieved by addition of the polymer dispersion to water or an aqueous solution of a surfactant in order to avoid flocculation. Usually, dilution is performed by using a 0.1% by weight aqueous solution of a non-ionic emulsifier, e.g. an ethoxylated C16/C18 alkanol (degree of ethoxylation of 18), as a diluent. Measurement configuration: HPPS from Malvern, automated, with continuous-flow cuvette and Gilson autosampler. Parameters: measurement temperature 20.0°C; measurement time 120 seconds (6 cycles each of 20 s); scattering angle 173°; wavelength laser 633 nm (HeNe); refractive index of medium 1.332 (aqueous); viscosity 0.9546 mPa·s. The measurement gives an average

value of the second order cumulant analysis (mean of fits), i.e. Z average. The "mean of fits" is an average, intensity-weighted hydrodynamic particle diameter in nm.

Determination of the average particle diameters may also be carried out, for example, by the analytical ultracentrifugation method to give the weight average particle diameter (cf. S.E. Harding et al., Analytical Ultracentrifugation in Biochemistry and Polymer Science, Royal Society of Chemistry, Cambridge, Great Britain 1992, Chapter 10, Analysis of Polymer Dispersions with an Eight-Cell-AUC-Multiplexer: High Resolution Particle Size Distribution and Density Gradient Techniques, W. Mächtle, pages 147 to 175). The weight-average particle diameter can also be determined by HDC (Hydrodynamic Chromatography fractionation), as for example described by H. Wiese, "Characterization of Aqueous Polymer Dispersions" in Polymer Dispersions and Their Industrial Applications (Wiley-VCH, 2002), pp. 41-73. For example, HDC measurements can be carried out using a PL-PSDA particle size distribution analyzer (Polymer Laboratories, Inc.), by injecting a small amount of sample into an aqueous eluent containing an emulsifier, resulting in a concentration of approx. 0.5 g/l and pumping the resulting mixture through a glass capillary tube of approx. 15 mm diameter packed with polystyrene spheres. As determined by their hydrodynamic diameter, smaller particles can sterically access regions of slower flow in capillaries, such that on average the smaller particles experience slower elution flow. The fractionation can be finally monitored using e.g. an UV-detector which measured the extinction at a fixed wavelength of 254 nm.

In a preferred group of embodiments, the polyfunctional polymer is a homo- or copolymer of at least one ethylenically unsaturated carboxylic acid (monomer M1) and optionally one or more further monoethylenically unsaturated monomers (monomer M2). Of course, the polyfunctional polymer might also be selected from the group consisting of polyurethanes, including polyether urethanes, polyester urethanes and hybrid polyurethanes, polyesters and alkyd resins.

If an aqueous dispersion of the polyfunctional polymer is used, the carboxyl groups are preferably neutralized by a volatile base such as ammonia, ethanol amine, N,N-dimethyl ethanol amine, N,N-diethylethanol amine, triethyl amine, N,N-diisopropylethylamine, 2-aminopropanol, 2-amino-2-methyl-1-propanol or 2-amino-1-butanol, with particular preference given to ammonia.

In particular, the aqueous dispersion of the polyfunctional polymer has a pH in the range from 6 to 9, in particular from 6.5 to 8.5.

The polyfunctional polymer is frequently a homo- or copolymer of at least one ethylenically unsaturated carboxylic acid (monomer M1) and optionally one or more further monoethylenically unsaturated monomers (monomer M2).

Suitable monomers M1 are in particular monoethylenically unsaturated monocarboxylic acids having 3 to 6 carbon atoms and monoethylenically unsaturated dicarboxylic acids having 4 to 6 carbon atoms. Frequently, the monomers M, which form the polymer carbon backbone, comprise one or more monoethylenically unsaturated monomers M1 having 1 or 2 carboxyl groups. Suitable monomers M1 include, but are not limited to

- monoethylenically unsaturated monocarboxylic acids having 3 to 6 carbon atoms, such as acrylic acid, methacrylic acid, crotonic acid, 2-ethylpropenoic acid, 2-propylpropenoic acid, 2-acryloxyacetic acid, 2-methacryloxyacetic acid, and beta-carboxyethyl acrylate,
- monoethylenically unsaturated dicarboxylic acids having 4 to 6 carbon atoms, such as itaconic acid and fumaric acid.

The polyfunctional polymer is preferably obtained from a monomer composition comprising 0.1 to 20 wt.-%, preferably 0.2 to 15 wt.-% and especially from 0.5 to 10 wt.-% of at least one monomer M1, which his preferably acrylic acid, methacrylic acid or a mixture thereof.

Suitable monomers M2 include, but are not limited to neutral monoethylenically unsaturated monomers M2a having a limited water solubility of at most 60 g/L at 20°C and 1013 mbar in deionized water.

Examples of monoethylenically unsaturated monomers, which have a low water solubility of at most 60 g/L at 20°C and 1013 mbar include, but are not limited to

- alkyl and cycloalkyl esters of acrylic acid or methacrylic acid (monomers M2a.1), hereinafter also termed alkyl (meth)acrylates and cycloalkyl(meth)acrylates, in particular the $C_1$-$C_{20}$ alkyl esters of acrylic acid, hereinafter termed $C_1$-$C_{20}$ alkyl acrylates, $C_5$-$C_{20}$ cycloalkyl esters of acrylic acid, hereinafter termed $C_5$-$C_{20}$ cycloalkyl acrylates, $C_1$-$C_{20}$ alkyl esters of methacrylic acid, hereinafter termed $C_1$-$C_{20}$ alkyl methacrylates, respectively and $C_5$-$C_{20}$ cycloalkyl esters of methacrylic acid, hereinafter termed $C_5$-$C_{20}$ cycloalkyl methacrylates;
- vinylaromatic hydrocarbon monomers (monomers M2a.2), in particular monovinyl substituted aromatic hydrocarbons, such as styrene, 2-methylstyrene, 4-methylstyrene, 2-n-butylstyrene, 4-n-butylstyrene, 4-n-decylstyrene and $\alpha$-methylstyrene, with particular preference given to styrene;
- N-$C_1$-$C_{10}$ alkyl amides of monoethylenically unsaturated monocarboxylic acids having 3 to 6 carbon atoms (monomers M2a.3), such as N-$C_1$-$C_{10}$ alkyl amides of acrylic acid or methacrylic acid, such as N-methyl acrylamide, N-ethyl acrylamide, N-propyl acrylamide, N-isopropyl acrylamide, N-butyl acrylamide, N-methyl methacrylamide, N-ethyl methacrylamide, N-propyl methacrylamide, N-isopropyl methacrylamide and N-butyl methacrylamide;

- olefins and haloolefins (monomers M2a.4), such as ethylene, propene, isobutene, diisobutene, vinyl chloride and vinylidene chloride;
- vinyl esters and allyl esters of saturated $C_1$-$C_{30}$ monocarboxylic acids (monomers M2a.5), especially of saturated $C_1$-$C_{30}$ monocarboxylic acids, such as vinyl acetate, vinyl propionate, vinyl hexanoate, vinyl octanoate and vinyl esters of Versatic® acids.

Amongst monomers M2a, preference is given to monomers M2a.1 and M2a.2 and mixtures thereof.

Examples of alkyl acrylates, in particular $C_1$-$C_{20}$ alkyl acrylates include, but are not limited to methyl acrylate, ethyl acrylate, n-propyl acrylate, isopropyl acrylate, n-butyl acrylate, 2-butyl acrylate, tert-butyl acrylate, n-pentyl acrylate, isopentyl acrylate, n-hexyl acrylate, n-heptyl acrylate, n-octyl acrylate, 2-ethylhexyl acrylate, 2-propylpentyl acrylate, n-decyl acrylate, 2-propylheptyl acrylate, $C_{10}$ isoamyl guerbet acrylate, 1-propylheptyl acrylate, lauryl acrylate and stearyl acrylate.

Examples of alkyl methacrylates, in particular $C_1$-$C_{20}$ alkyl methacrylates include, but are not limited to methyl methacrylate, ethyl methacrylate, n-propyl methacrylate, isopropyl methacrylate, n-butyl methacrylate, 2-butyl methacrylate, tert-butyl methacrylate, n-pentyl methacrylate, isopentyl methacrylate, n-hexyl methacrylate, n-heptyl methacrylate, n-octyl methacrylate, 2-ethylhexyl methacrylate, 2-propylpentyl methacrylate, n-decyl methacrylate, 2-propylheptyl methacrylate, $C_{10}$ isoamyl guerbet methacrylate, 1-propylheptyl methacrylate, lauryl methacrylate and stearyl methacrylate.

Examples of cycloalkyl acrylates, in particular $C_5$-$C_{20}$ cycloalkyl acrylates include, but are not limited to cyclopentyl acrylate, cyclohexyl acrylate, 4-methylcyclohexyl acrylate and 4-tert-butylcyclohexyl acrylate.

Examples of cycloalkyl methacrylates, in particular $C_5$-$C_{20}$ cycloalkyl methacrylates include, but are not limited to cyclopentyl methacrylate, cyclohexyl methacrylate, 4-methylcyclohexyl methacrylate and 4-tert-butylcyclohexyl methacrylate.

Suitable monomers M2 may also include monoethylenically unsaturated monomers M2b having an increased water solubility of more than 60 g/L at 20°C and 1013 mbar in deionized water, which are different from monomers M1 or which have a reactive group. Those monomers M2b are preferably selected from the group consisting of

- primary amides of monoethylenically unsaturated monocarboxylic acids having 3 to 8 carbon atoms (monomers M2b.1), such as acrylamide and methacrylamide;
- monoethylenically unsaturated monomers bearing a urea group (monomers M2b.2), such as 2-(2-oxo-imidazolidin-1-yl)ethyl (meth)acrylate, 2-ureido (meth)acrylate, N-[2-(2-oxooxazolidin-3-yl)ethyl]methacrylate;
- monoethylenically unsaturated monomers bearing a keto group (monomers M2b.3), such as diacetone acrylamide and diacetone methacrylamide;
- hydroxyalkyl esters of monoethylenically unsaturated $C_3$-$C_6$ monocarboxylic acids that are different from monomers M.a (monomers M2b.4), especially hydroxyalkyl esters of acrylic acid and hydroxyalkyl esters of methacrylic acid, also referred to hereinafter as hydroxyalkyl (meth)acrylates, in particular hydroxy-$C_2$-$C_4$-alkylesters of acrylic acid and hydroxy-$C_2$-$C_4$-alkylesters of methacrylic acid, such as 2-hydroxyethyl acrylate, 3-hydroxypropyl acrylate, 4-hydroxybutyl acrylate, 2-hydroxyethyl methacrylate, 3-hydroxypropyl methacrylate, 4-hydroxybutyl methacrylate, etc.;
- monoethylenically unsaturated monomers having at least one acidic group, selected from $SO_3H$, $PO_3H_2$ or $OPO_3H_2$, or a salt thereof (monomers M2b.5), such as the aforementioned monomers of the formula (I)
- monoethylenically unsaturated monomers which bear at least one mono-, di- and/or tri-$C_1$-$C_4$-alkoxysilane group (monomers M2b.6), such as vinyl trimethoxysilane, vinyl triethoxysilane, methacryloxyethyl trimethoxysilane, methacryloxyethyl triethoxysilane, and mixtures thereof. The amount of said monomers M3.6 will frequently be in the range from 0.01 to 1 pphm;
- monoethylenically unsaturated monomers bearing at least one epoxy group, in particular a glycidyl group (monomers M2b.7), such as glycidyl acrylate and glycidyl metharylate, and

mixtures of the aforementioned monomers M2b.1 to M2b.7.

The polyfunctional polymer may also contain polymerized multiethylenically unsaturated monomers, hereinafter termed monomers M3, i.e. monomers having at least 2 non-conjugated ethylenically unsaturated double bounds. The amounts of said monomers M3 will generally not exceed 1 pphm based on the amount of monomers forming the polyfunctional polymer.

If the polyfunctional polymer is present as a polymer dispersion, the polyfunctional polymer therein is frequently a copolymer of at least one ethylenically unsaturated carboxylic acid (monomer M1) and one or more further monoethylenically unsaturated monomers (monomer M2) as defined above. These polymer dispersions are often also termed as polymer latexes. The polyfunctional polymers forming the aqueous polymer latex are usually obtained by emulsion polymerizing a monomer mixture M', which comprises at least one monomer M1, at least one monomer M2a, which is in particular selected from the group consisting of monomers M2a.1 and M2a.2, in particular a mixture thereof, and

optionally one or more of the monomers M2b and/or M3.

In such a polymer latex the relative amounts of monomers M1, M2a, M2b and M3 are preferably as follows:

- 0.1 to 20 wt.-%, preferably 0.2 to 15 wt.-% and especially from 0.5 to 10 wt.-% of at least one monomer M1,
- 80 to 99.9 wt.-%, preferably 85 to 99 wt.-% and especially from 90 to 98 wt.-% of at least one monomer M2a,
- 0 to 19.9 wt.-%, preferably 0.1 to 14.8 wt.-% and especially from 0.2 to 9.5 wt.-% of one or more monomers M2b,
- optionally at most 1 wt.-% of monomers M3.

Suitable polyfunctional polymers, which are polymer latexes that bear carboxylic groups and that in particular comprise a volatile base such as ammonia, ethanol amine, N,N-dimethyl ethanol amine, N,N-diethylethanol amine, triethyl amine, N,N-diisopropylethylamine, 2-aminopropanol, 2-amino-2-methyl-1-propanol or 2-amino-1-butanol are commercially available or can be prepared by neutralizing a polymer latex that bears carboxylic groups by a volatile base.

In another preferred group of embodiments, the polyfunctional polymer is a polyurethane or a hybrid polymer of a polyurethane and a homo- or copolymer of ethylenically unsaturated monomers, hereinafter hybrid polyurethane. In particular, the polyurethane or the hybrid polyurethane is present as an aqueous dispersion.

Suitable polyurethane are the reaction products of di- or polyisocyanates and a di- or polyol component, wherein the di- or polyol component bears at least one monomer that bears a carboxyl group.

In particular, the polyurethane is selected from polyester polyurethanes, polyether polyurethanes, polyacrylates/polymethacrylates polyurethanes and hybrids of these polyurethanes with one or more homo- or copolymers of ethylenically unsaturated monomers.

Suitable commercial aqueous polyurethane dispersions which bear carboxyl groups and which are neutralized with a volatile base are well established. The synthesis is generically described by M. Dimmers and M. Diedering in Farbe & Lack 2014, 4, 24-29. Polyurethane dispersions and respective polyurethane/polyacrylate hybrid dispersions are for example described in WO 00/37518 (= EP 1151020), WO 2007/082826, WO 2009/144180, WO 2010/009993, WO 2010/142617, WO 2012/084668 (= EP 11794507), WO 2017/102777.

Further suitable aqueous polyurethane dispersions and polyurethane hybrid dispersions are for example commercially available as Daotan TW 1225/40 WA, Daotan TW 1235/36 WA, Daotan TW 1252/42 WA, Daotan TW 6425/40 WA, Daotan TW 6440/43 WA, Daotan TW 6450/30 WA, Daotan TW 6464/36 WA, Daotan TW 6490/35 WA, Daotan TW 7000/40 WA, Daotan VTW 1262/35 WA, Daotan VTW 1265/36 WA, that are commercial products from Allnex. Further suitable aqueous polyurethane dispersions are for example obtainable as Bayhydrol U 2757, Bayhydrol UH 2557, Bayhydrol UH 2558, Bayhydrol UH 2606, Bayhydrol UH 2648/1, Bayhydrol UH 2874, Bayhydrol UA 2856 XP, that are commercial products from Covestro. Further suitable aqueous polyurethane dispersions are for example obtainable as NeoRez R-563, NeoRez R-600, NeoRez R-1005, NeoRez R-1007, NeoRez R-2170, NeoRez R-2180, NeoRez R-4000, NeoRez R-9029, that are commercial products from DSM.

A further aspect of the present invention is a method for crosslinking a polyfunctional polymer bearing a plurality of carboxyl groups, which comprises combining the at least one copolymer P as defined herein and the polyfunctional polymer as defined herein.

The copolymer P and the polyfunctional polymer are usually combined as aqueous solution and/or dispersion. In a preferred embodiment, the polyfunctional polymer is present as an aqueous polymer dispersion. As the copolymer P is water-soluble or water dispersible, it can be easily incorporated into the aqueous polymer dispersion of the polyfunctional polymer. Therefore, the present invention also relates to an aqueous composition containing at least one copolymer P and at least one polyfunctional polymer in the form of an aqueous polymer dispersion, in particular an aqueous polymer dispersion of a copolymer of monomers M1 and M2 or an aqueous polymer dispersion of a polyurethane or of a hybrid polyurethane.

Frequently, the aqueous polymer latex of the polyfunctional polymer and the copolymer P are combined by mixing the aqueous polymer latex of the polyfunctional polymer and an aqueous solution of the copolymer P.

The relative amounts of the copolymer P and polyfunctional polymer in the aqueous composition will usually be such that the weight ratio of the copolymer P to the polyfunctional polymer is from 1:100 to 1:1, in particular form 1:70 to 1:2. Usually the copolymer P will be used in such an amount that the molar ratio of carboxyl groups in the polyfunctional polymer to oxazoline groups in the copolymer P is in the range from 20:1 to 1:2, in particular in the range from 10:1 to 1:1.

The aqueous composition usually contains the copolymer P an amount of 1 to 30% by weight, preferably of 2 to 15% by weight, based on the total amount of solids of copolymer P and polyfunctional polymer.

Besides the copolymer P and the polyfunctional polymer, the aqueous composition may contain further ingredients, such as small amounts of the decomposition products of the polymerization initiator or the chain regulator used for preparing the polyfunctional polymer and/or the copolymer P.

Apart from that, the aqueous copolymer may contain further additives frequently used in in aqueous solutions or dispersions of polymers, e.g. stabilizers against chemical degradation and biocides for stabilization of the solution or

dispersion against infestation with microorganisms. The aqueous composition may in particular contain means for adjusting the pH value. Frequently, the pH of the aqueous composition is adjusted by means of a base, in particular by a volatile base, such as ammonia to avoid premature crosslinking of the copolymer P and the polyfunctional polymer. In order to guarantee storage stability for more than several days, the pH of the aqueous composition is frequently in the range from pH 7 to 9, in particular from pH 7.5 to 8.5. In order to increase the reactivity and thus the speed of crosslinking, the pH may be adjusted to lower pH values, e. g. to a pH value in the range of pH 3 to 7 in particular to pH 4 to 6. The pH is usually adjusted by addition of a suitable amount of an acid. Suitable acids include mineral acids, such as hydrochloric acid, sulfuric acid and phosphoric acid and organic acids, such as formic acid, acetic acid, citric acid or glycolic acid. Usually the acid is added prior to the use of the composition.

In particular, the aqueous composition contains, based on the total amount of polymer

i) 1 to 50% wt.-%, preferably 1.5 to 30 wt.-%, based on the total amount of copolymer P and polyfunctional polymer, of the at least one above-described copolymer P;
ii) 50 to 99% wt.-%, preferably 70 to 98.5 wt.-%, based on the total amount of copolymer P and polyfunctional polymer, of the at least one polyfunctional polymer, which is preferably present in the form of a polymer latex;
iii) optionally 0.1 to 5 wt.-%, based on the total amount of copolymer P and polyfunctional polymer, of at least one basic compound, in particular at least one volatile basic compound, especially ammonia,

The total concentration of the copolymer P and the polyfunctional polymer in the aqueous composition may vary depending from the desired purpose and is frequently in the range from 10 to 70 wt.-%, in particular from 20 to 65 wt.-%, based on the total weight of the composition.

These aqueous compositions, which contain the copolymer P and the polyfunctional polymer, can preferably be used as a binder, in particular a binder for coatings. In particular, the aqueous composition can be used as binder in the production of adhesives, sealants, synthetic resin renders, paper coating slips, fiber nonwovens, flexible roofings and paints, and also in sand consolidation, but also as component in the production of textile or leather auxiliaries and as impact modifier or for modifying mineral binders and plastics.

By evaporating the volatile constituents of the aqueous composition, the oxazoline groups of the copolymer P will react with the carboxyl groups of the polyfunctional polymer resulting in a crosslinking. The crosslinking can take place at room temperature. It is also possible to heat the mixture comprising the copolymer P and the polyfunctional polymer according to the invention to temperatures of from 40 to 200°C, preferably 50 to 150°C.

EXAMPLES

1. Analytics

1.1 Gel permeation chromatography (GPC)

The number average molecular weight Mn and the weight average molecular weight Mw have been determined by GPC via size exclusion chromatography according to DIN 55672-2:2008:06, using commercial polymethylmethacrylate standards and tetrahydrofuran (THF) as eluent. The following equipment was used:

GOC apparatus: PSS Agilent Technologies 1260 Infinity
Columns: 1x PLGel Mixed E Guard (Pre-column), length 5 cm, diameter 0.75 cm
Main column 1: 1x PLGel Mixed E, length 30 cm, diameter 0.75 cm
Main column 2: 1x PLGel Resipore, length 30 cm, diameter 0.75 cm

The following parameters have been applied:

Solvent: THF
Flow rate: 1 mL/min
Injection volume: 50 μL
Concentration: 1 g/L
Temperature: Ambient temperature (ca. 20°C)

1.2 FFF (Field flow fractionation)

The average mass molar weight Mw and the number average molecular weight of the copolymers was also determined by field flow fractionation FFF. FFF yields the actual molecular weight of polymer aggregates and thus allows

to find out whether the copolymers P are present in molecularly dissolved form or in form of aggregates. FFF also give the hydrodynamic radius.

For this, a colloidal sample (7 g/L in 20 mL THF) was separated by hydrodynamic radius in a long, narrow fractionation channel perpendicular to the direction of flow. THF was used as eluent. The radius of all obtained fractions was measured with a multi-angle light scattering detector and molar masses are obtained by the comparison signals of the refractive index and light scattering detector. For calculation a gradient of dn/dc=0.08 $cm^3$/g was used. For measuring soluble fractions, the sample was filtrated over 0.2 μm. For measuring gel fractions, a filter with 5.0 μm was used. Missing fractions (recovery rate < 100%) might be retained by a pre filter (> 5 μm) or lost by the separation membrane (Mw < 5 kDa). The obtained values of %-Sol and %-Gel are correction according to the nature of the samples and result in total to 100%. The average molar mass Mw is calculated by the formula:

$$Mw = \%Sol \times Mw(sol) + \%Gel \times Mw(gel).$$

Setting for the separation

Sol: flow: 0.7 mL/min; crossflow: 3.0 const. 5 min to 0.1 mL/min in 20 min; focus: 133. Gel: flow: 0.7 mL/min; crossflow: 3.0 const. 3 min to 0.1 mL/min in 15 min; focus: 133.

1.3 Determination of glass transition temperature

The glass transition temperature is measured by means of differential scanning calorimetry in accordance with ISO 11357-2:2013-05. For conditioning, the polymers are poured out, dried over-night, then dried at 120°C in a vacuum drying cabinet for 1 h. At measurement, the sample is heated to 150°C, cooled rapidly, and then measured on heating at 20°C/min up to 150°C. The value reported is the mid-point temperature.

1.4 Determination of solids content

The solids content was determined by drying the sample and measuring its dry weight. Therefore, a solids content device Sartorius MA 45 was used with constant weight program is used. A sample of 1.5 g prepared in a tared small aluminum pan with glass fiber pad and covered with a cap. The drying program "120°C Automatic" is started. The glass fiber pad is pre-dried with the same program. Every sample solids content is calculated by a double determination.

1.5 Determination of pH

For pH measurement a pH electrode (Knick Portamess 913 X pH) was used. The measurement was performed at room temperature with 30 g of the original sample.

1.6 Determination of swelling index and gel content

A mixture of AA-Dispersion described below and copolymer P was prepared then cast to a film, which was dried for 7 days at room temperature and ambient conditions. Pieces of 1 g film were cut from the initial film. Each piece was put into a tared 100 mL bottle and its weight was measured. Then, maximum 100 mL of methyl ethyl ketone MEK were added. The bottle was stored for 24 hours at room temperature under slight orbital shaking conditions. Afterwards, swollen films were filtrated over zero tared filters with 45 μm mesh size to remove unused MEK and the weight of the swollen film was measured. Afterwards, the swollen samples were dried at 60°C and cooled down to room temperature and again the weight was measured.

Swelling index is calculated by following formula:

$$\text{Swelling index} = m(\text{swollen})/m(\text{dried gel})$$

Gel content is calculated by following formula:

$$\text{Gel content} = m(\text{swollen})/m(\text{initial dry})*100\%$$

The measurements were carried out at least in duplicates.

1.7 Dynamic-mechanical analysis (DMTA)

DMTA was performed using a rheometrics solids analyzer RSA II in a measuring-temperature range from -100°C to +200°C, with a heating rate of 2°C/min and a frequency f of 1 Hz. For the dispersion films under measurement, the storage moduli E' and tan $\delta$ were ascertained (sample geometry: 34.5 mm length, 6.0 mm width, thickness in the range of 0.645 to 0.975 mm). The measurements were represented in graph form by plotting E' and tan $\delta$ against the temperature. If required, the glass transition temperature $T_g$ can be determined from the E" graphs.

1.8 Stability against hydrolysis

For determination of stability against hydrolysis, the aqueous polymer solutions were stored for 5 days at 60°C. Before and after storage, the alcohol concentration, which indicates hydrolysis, was determined using head space gas chromatography.

1.9 Turbidity as expressed in NTU units

The turbidity of the aqueous solutions of the copolymers as well as of the corresponding dispersions was determined as described in accordance with ISO 7027-1:2016 and expressed in nephelometric turbity units, thus NTU. The NTU has been determined at a concentration of 10 g/L in deionized water at 20°C and 1013 mbar.

1.10 Dynamic Viscosity

The dynamic viscosities of the aqueous solutions of the copolymers P were measured by means of a rotational viscometer at a polymer concentration of 15 wt.-%. The measurement was conducted at 22°C with increasing and decreasing shear rate in the range of 25-500 $s^{-1}$ and an alteration of the shear rate of 6.25 $s^{-2}$.

2. Starting materials and abbreviations

- AMPS: 2-acrylamindo-2-methylpropanesulfonic acid
- AMPS-Na: 2-acrylamido-2-propanesulfonic acid sodium salt
- DSC: differential scanning calorimetry
- FFF: Field flow fractionation
- GPC: Gel permeation chromatography
- iPOx: 2-isopropenyl-2-oxazoline
- LMA: lauryl methacrylate,
- MMA: methyl methacrylate
- nBA: n-butyl methacrylate
- n.d.: not determined
- NTU: nephelometric turbity units,
- PPM5S: polypropyleneglycol methacrylate, having 5 repeating units
- pphm: parts per 100 parts of monomers
- Tg: Glass transition temperature

AMPS was used as a 50 wt.-% solution of its sodium salt (AMPS-Na) in water.

3. Polymerization of copolymers P according to the invention

In a 2 L glass reactor with anchor stirrer, thermocouple, and reflux condenser, the initial charge consisting of water, 5.36 g (2.5 pphm) azo free-radical initiator (2,2'-azobis(2-methylbutyronitrile) and 726.32 g (322.81 pphm) isopropanol, was heated under a gentle stream of $N_2$ to 70°C initial temperature.

When the initial temperature was reached, feeds 1, 2, and 3 according to table 1 were started and metered in over 3 h. A solution of 5.63 g (2.5 pphm) azo free-radical initiator in 126 g (56 pphm) of isopropanol was metered (as

feed 4) within 3.5 h into the reaction vessel. The amount of feeds 1, 2, and 3 was chosen to obtain a total amount of components contained in the reaction mixture (sum of all components including monomers, solvent, initiator, etc.) of 1122.32 g.
When the feeds were complete, the reaction mixture was polymerized for further 12 hours at 70°C. The mixture was subjected to steam distillation, where isopropanol was replaced by water, until a final polymer concentration of about 20 to 25 was achieved.

Table 1 - Monomer mixture

| | Feed 1 | | Feed 2 | Feed 3 |
|---|---|---|---|---|
| | MMA | iPOx | LMA | AMPS-Na(1) |
| P1 | 30 wt.-% | 25 wt.-% | 30 wt.-% | 15 wt.-% |
| P2 | 35 wt.-% | 20 wt.-% | 30 wt.-% | 15 wt.-% |
| P3 | 40 wt.-% | 15 wt.-% | 30 wt.-% | 15 wt.-% |
| P4 | 45 wt.-% | 10 wt.-% | 30 wt.-% | 15 wt.-% |
| P5 | 50 wt.-% | 5 wt.-% | 30 wt.-% | 15 wt.-% |
| (1) Feed 3 is a mixture of a 50 % aqueous solution of the AMPS-Na. The amounts given relate to AMPS-Na | | | | |

The obtained polymer solutions had the following characteristics summarized in table 2.:

Table 2 - Characterization of the copolymer solution

| | Visual appearance | Solids content | pH | NTU | R1) [nm] | Visc2) [mPas] |
|---|---|---|---|---|---|---|
| P1 | Translucent | 22.4 % | 9 | 46 | 8 | 11 |
| P2 | Translucent | 22.6 % | 8.9 | 80 | n.d. | 11 |
| P3 | Translucent | 20.8 % | 8.8 | 46 | 19 | 9 |
| P4 | Translucent | 25.9 % | 8.8 | 88 | 23 | 9 |
| P5 | Translucent | 23.7 % | 8.4 | 84 | 21 | 7 |
| 1) R: Hydrodynamic radius as determined by FFF<br>2) Visc.: Dynamic viscosity of a 15 wt.-% aqueous solution determined at 22°C and a shear rate of 100 $s^{-1}$ | | | | | | |

The physico-chemical properties of the obtained copolymers are summarized in table 3.

Table 3 - Characterization of the copolymers

| | FFF Mw in kg/mol | FFF Mn in kg/mol | GPC Mw in kg/mol | GPC Mn in kg/mol | Chains per Aggregate | Tg (Fox) [°C] | Tg (DSC) [°C] |
|---|---|---|---|---|---|---|---|
| P1 | 720 | 395 | 15.7 | 6.8 | 57 | 51 | 63 |
| P2 | 6800 | 715 | 18.4 | 7.3 | 98 | 51 | 51 |
| P3 | 4000 | 930 | 18.9 | 7.3 | 129 | 47 | 57 |
| P4 | 9300 | 1300 | 20.0 | 7.6 | 172 | 44 | 57 |
| P5 | 7700 | 1500 | 21.7 | 7.6 | 196 | 41 | 52 |

4. Stability:

The aqueous solutions of copolymers P1 to P5 of the present invention as described above and the aqueous solutions polymers P1 and P4 were tested with regard to stability against hydrolysis by the method outlined in point 1.8. While the polymers of P1 and P4 of WO 2015/197662 after storage showed a total alcohol concentration of more than 1000 ppm, the concentration of alcohols in the aqueous solutions of copolymers P1 to P5 of the present invention was below 200 ppm.

The stability was also determined by measuring the viscosity directly after preparation and after storage for 3 month at 22°C. The aqueous solutions of copolymers P1 to P5 only showed a slight increase in viscosity of less than 50% of the original value.

5. Crosslinking of aqueous polymer dispersions of polyfunctional polymers

5.a Crosslinking of a carboxylated acrylate based model polymer dispersion

As a model polymer dispersion, an acrylic polymer latex (AA-dispersion) was used which was obtained from a semi batch seeded emulsion polymerization from a monomer mixture consisting of 50 parts n-butyl acrylate and 48 parts methyl methacrylate including functional monomers of 2 parts acrylic acid using sodium persulfate as initiator and 1.2 pphm of 30 nm seed latex. Furthermore, 1.5 wt.-% Disponil FES 77 and 0.5 wt.-% Lutensol AT 18 were used as emulsifiers, which are both available from BASF SE.

The average particle diameter (via hydrodynamic column chromatography) was determined to d = 122 nm and the solids content to 49.1%. The dispersion was set to pH 8 using ammonia and exhibited an intrinsic gel content of 61%.

Table 5 - Degree of swelling

| | Composition(1) | solid/solid in % (2) | Gel content in % | Swelling index |
|---|---|---|---|---|
| 1 | AA-Dispersion | 0 | 61 | 52 |
| 2 | 25 mol% of P1 + AA-Dispersion | 3 | 76 | 9 |
| 3 | 25 mol% of P2 + AA-Dispersion | 4 | 77 | 9 |
| 4 | 25 mol% of P3 + AA-Dispersion | 5 | 78 | 10 |
| 5 | 25 mol% of P4 + AA-Dispersion | 8 | 75 | 11 |
| 6 | 50 mol% of P1 + AA-Dispersion | 6 | 84 | 7 |
| 7 | 50 mol% of P2 + AA-Dispersion | 8 | 83 | 7 |
| 8 | 50 mol% of P3 + AA-Dispersion | 10 | 84 | 9 |
| 9 | 50 mol% of P4 + AA-Dispersion | 16 | 79 | 9 |
| 1) Copolymers P from examples P1 to P4<br>2) Relative amount of copolymer P based on polymer of AA-Dispersion | | | | |

As a second example, styrene acrylic dispersion Acryl-D1 was crosslinked by mixing it with the aqueous solution of the crosslinking agent copolymer P3 as described in table 6. The relative amounts were adjusted to a 40 mol-% addition level of the crosslinker.

Table 6 - Crosslinking of a styrene acrylic dispersion

| | Composition | Copolymer P (2) | Gel content | Swelling index | Film mechanics |
|---|---|---|---|---|---|
| B01 | 100 parts Acryl-D1 (1) | 0 | 60% | 28 | feeble |
| B02 | 100 parts Acryl-D1 (1) | 8.0 parts | 67% | 20 | tight |
| (1) As Acryl-D1, the commercially available product "Epotal® CF 305" of BASF SE was used, which is a 45% by weight aqueous styrene acrylic dispersion with a glass transition temperature of approximately -30°C and a COOH content of approx. 270 meq/g.<br>(2) The amount given refers to the amount of solid copolymer P from example P3. | | | | | |

Successful crosslinking reaction by copolymer P may be observed by an increase in gel content and/or a reduction in the swelling index as well as by a strong increase in film toughness. As for the latter, polymer films as used for determination of gel content / swelling index were gently stretched by hand to about twice their initial length (if possible). The film mechanics were evaluated on a relative/comparative scale by persons skilled in the art.

As additional prove, DMTA measurements have been conducted to compare the mechanical behavior of a film of a polyfunctional polymer with those of a film of a polyfunctional polymer that is crosslinked with a copolymer P.

The respective films were stored for 2 weeks at ambient conditions and for further additional 5 days at + 40°C.

The following data relates to films of the polyfunctional polymer Acryl-D1, thus the commercially available product "Epotal® CF 305" of BASF SE as described above, whereas the example P3 has been used as copolymer P:
It was found that the films without addition of a copolymer P disintegrated at temperatures above 150°C under testing conditions whereas the films comprising a copolymer P in their DMTA curves exhibited a distinct "crosslinking plateau" at an E' modulus in the range of 0.6 to 1.0 MPa.

5.b Crosslinking of a carboxyl groups bearing polyurethane dispersions

As a model polyurethane dispersion PU-D, a polyester polyurethane dispersion PU-D was prepared following the general procedure given in Example PU-I from EP 2655458. By variation of the polyesterol composition and employing slightly different ratios of the starting monomers, the synthesis yielded a polyurethane dispersion with an acid number of 23.9 g KOH / kg (translating into 0.43 meq "-COOH" /g) and a solids content of 38.9% by weight. PU-D exhibits an intrinsic gel content of 54% at a swelling index of 7.0.

As a model polyacrylate dispersion to be combined with the polyurethane dispersion described above, an acrylic polymer latex Acryl-D2 was used which was obtained from a semi batch seeded emulsion polymerization from a monomer mixture consisting of 60.0 parts n-butyl acrylate and 35.9 parts methyl methacrylate including functional monomers of 2.5 parts of diacetone acrylamide and 1.6 parts of acrylic acid. The solids content was determined to 39.6%. The dispersion was set to pH 7.1 using ammonia and exhibited an intrinsic gel content of 82% at a swelling index of 29.0.

The polyurethane dispersion PU-D as well a 50:50-blend (wt/wt) thereof with polyacrylate dispersion Acryl-D2 were crosslinked by mixing it with an aqueous solution of copolymer P, namely P3 as described in table 7.

Table 7 - Crosslinking of dispersions comprising polyurethane

| | Polymer dispersion (1)(2) | Copolymer P (3) | Gel content | Swelling index |
|---|---|---|---|---|
| A01 | 100 parts PU-D | -- | 54% | 7.0 |
| A03 | 100 parts PU-D | 14.2 parts | 77% | 7.4 |
| A04 | 50 parts PU-D + 50 parts Acryl-D2 | - | 68% | 23.9 |
| A06 | 50 parts PU-D + 50 parts Acryl-D2 | 10.8 parts | 71% | 16.1 |

(1) As PU-D, the dispersion as described above was used.
(2) As Acryl-D2, the dispersion as described above was used.
(3) As copolymer P, the copolymer solution of example P3 was used; the amount given is based on solid copolymer.

As may be seen from the data compiled in Table 7, addition of a copolymer P results in a reduction of the swelling index and/or an increased gel content of respective polymer films indicating a successful crosslinking reaction.

## Claims

1. A water-soluble or water dispersible copolymer P which is obtainable by copolymerizing a monomer composition of ethylenically unsaturated monomers M comprising

   a) 50 to 92 wt.-%, based on the total amount of monomers M, of at least one monoethylenically unsaturated monomer M.a selected from the group consisting of nonionic esters of methacrylic acid and $C_8$-$C_{20}$-vinyl aromatic monomers,
   b) 3 to 30 wt.-%, based on the total amount of monomers M, of at least one monoethylenically unsaturated monomer M.b which comprises at least one sulfonic acid group or a salt thereof,
   c) 5 to 35 wt.-%, based on the total amount of monomers M, of at least one monoethylenically unsaturated monomer M.c which comprises at least one oxazoline group,
   d) less than 10 wt.-%, based on the total amount of monomers M, of a monoethylenically unsaturated monomer M.d selected from the group consisting of $C_1$-$C_{20}$-alkylesters of acrylic acid,

   where the copolymer does essentially not contain copolymerized monomers bearing a carboxyl group and where the copolymer P has a glass transition temperature, as determined by differential scanning calorimetry according to ISO 11357-2:2013-05, of at most 90°C.

**2.** The copolymer P according to claim 1, where the monomer composition comprises less than 5 wt.-%, preferably less than1 wt.-% and more preferably less than 0.1 wt.-%, based on the total amount of monomers M, of monomers M.d.

**3.** The copolymer P according to any one of the preceding claims, wherein the monomer M.a comprises at least one monomer M.a1 selected from the group consisting of $C_6$-$C_{20}$-alkylesters of methacrylic acid and monomers of the formula (III)

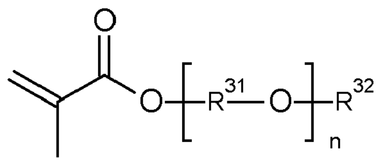

(III)

wherein

$R^{31}$ is selected from $C_2$-$C_4$-alkylene and phenyl-$C_2$-$C_4$-alkylene,
n is an integer from 1 to 10,
$R^{32}$ is H or $C_1$-$C_{18}$-alkyl.

**4.** The copolymer P according to any one of the preceding claims, wherein the monomer M.a comprises a combination of

i) at least one monomer M.a1 selected from $C_6$-$C_{20}$-alkylesters of methacrylic acid and monomers of the formula (III); and
ii) at least one monomer M.a2 selected from $C_1$-$C_5$-alkylesters of methacrylic acid.

**5.** The copolymer P according to claim 4, wherein the monomer M.a1 is selected from the group consisting of $C_8$-$C_{16}$-alkylesters of methacrylic acid and mixtures thereof and wherein the monomer M.a2 is methyl methacrylate.

**6.** The copolymer P according to any one of the preceding claims, wherein the monomer M.b is selected from compounds of formula (I)

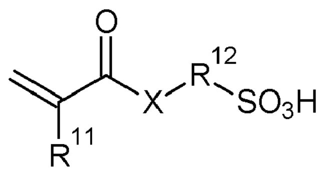

(I)

wherein

X is NH or O,
$R^{11}$ is hydrogen or methyl,
$R^{12}$ is selected from the group consisting of $C_1$-$C_{10}$-alkylene, phenylene, and $C_1$-$C_{10}$-alkylphenylene,

and the salts thereof.

**7.** The copolymer P according to any one of the preceding claims, wherein the monomer M.c is selected from compounds of formula (II)

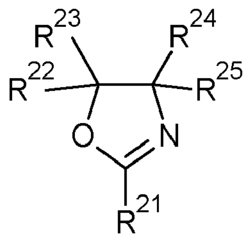

(II)

wherein

$R^{21}$ is a $C_2$-$C_{20}$-alkenyl radical having at least one ethylenically unsaturated bond,
$R^{22}$, $R^{23}$, $R^{24}$, $R^{25}$ are, independently from each other, selected from the group consisting of hydrogen, halogen, $C_1$-$C_{20}$-alkyl, $C_2$-$C_{20}$-alkenyl, $C_6$-$C_{20}$-aryl, $C_7$-$C_{32}$-arylalkyl, $C_1$-$C_{20}$-hydroxyalkyl, $C_1$-$C_{20}$-aminoalkyl, and $C_1$-$C_{20}$-haloalkyl.

**8.** The copolymer P according to any one of the preceding claims, wherein the copolymer P has a number average molecular weight, as determined by gel permeation chromatography, in the range of 2000 to 50000 g/mol.

**9.** A process for preparing the copolymer P according to any one of the preceding claims, comprising a free radical polymerization of the monomer composition of monomers M.

**10.** An aqueous solution or dispersion of the copolymer P of any one of claims 1 to 8.

**11.** A process for preparing an aqueous solution or dispersion of the copolymer P of any of claims 1 to 8, which comprises preparing the copolymer P by a free radical polymerization of the monomer composition of monomers M and subsequently dissolving or dispersing the copolymer in water.

**12.** The use of a copolymer P as defined in any one of claims 1 to 8 for crosslinking a polyfunctional polymer bearing a plurality of carboxyl groups.

**13.** A method for crosslinking a polyfunctional polymer bearing a plurality of carboxyl groups, which comprises combining the at least one copolymer P as defined in any one of claims 1 to 8 and the polyfunctional polymer.

**14.** An aqueous composition containing

i) at least one copolymer P according to any one of claims 1 to 8,
ii) at least one polyfunctional polymer bearing a plurality of carboxyl groups in the form of an aqueous polymer dispersion.

**15.** The use of the aqueous composition of claim 14 as a binder.

Europäisches Patentamt
European Patent Office
Office européen des brevets

# EUROPEAN SEARCH REPORT

Application Number
EP 19 18 9937

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2018/118985 A1 (ZORN MATTHIAS [DE] ET AL) 3 May 2018 (2018-05-03) * paragraphs [0001], [0061] - [0064], [0111], [0156], [0166] * * table 1 * ----- | 1-15 | INV. C08F220/14 C08L33/06 C08L33/26 |
| A,D | US 2017/152333 A1 (ZORN MATTHIAS [DE] ET AL) 1 June 2017 (2017-06-01) * paragraphs [0001] - [0005] * * table 1 * ----- | 1-15 | |

TECHNICAL FIELDS SEARCHED (IPC)

C08F
C08L

The present search report has been drawn up for all claims

1

| Place of search | Date of completion of the search | Examiner |
|---|---|---|
| The Hague | 19 December 2019 | Fernandez Recio, L |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT ON EUROPEAN PATENT APPLICATION NO.

EP 19 18 9937

This annex lists the patent family members relating to the patent documents cited in the above-mentioned European search report. The members are as contained in the European Patent Office EDP file on
The European Patent Office is in no way liable for these particulars which are merely given for the purpose of information.

19-12-2019

| Patent document cited in search report | Publication date | Patent family member(s) | Publication date |
|---|---|---|---|
| US 2018118985 A1 | 03-05-2018 | BR 112017022546 A2 | 17-07-2018 |
| | | CA 2983199 A1 | 27-10-2016 |
| | | CN 107531855 A | 02-01-2018 |
| | | EP 3286235 A1 | 28-02-2018 |
| | | ES 2733462 T3 | 29-11-2019 |
| | | JP 2018517799 A | 05-07-2018 |
| | | US 2018118985 A1 | 03-05-2018 |
| | | WO 2016169819 A1 | 27-10-2016 |
| US 2017152333 A1 | 01-06-2017 | CN 106604943 A | 26-04-2017 |
| | | EP 3161028 A1 | 03-05-2017 |
| | | ES 2715517 T3 | 04-06-2019 |
| | | JP 2017519089 A | 13-07-2017 |
| | | KR 20170024042 A | 06-03-2017 |
| | | TR 201902550 T4 | 21-03-2019 |
| | | US 2017152333 A1 | 01-06-2017 |
| | | WO 2015197662 A1 | 30-12-2015 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 5300602 A
- WO 2015197662 A
- WO 0037518 A
- EP 1151020 A
- WO 2007082826 A
- WO 2009144180 A
- WO 2010009993 A
- WO 2010142617 A
- WO 2012084668 A
- EP 11794507 A
- WO 2017102777 A
- EP 2655458 A


### Non-patent literature cited in the description


- **T. G. FOX.** *Bull. Am. Phys. Soc.,* 1956, vol. 1, 123
- Ullmann's Encyclopädie der technischen Chemie [Ullmann's Encyclopedia of Industrial Chemistry. Verlag Chemie, 1980, vol. 19, 18
- Ullmann's Encyclopädie der technischen Chemie [Ullmann's Encyclopedia of Industrial Chemistry. Verlag Chemie, 1992, vol. A21, 169
- **J. BRANDRUP ; E. H. IMMERGUT.** Polymer Handbook. J. Wiley, 1966
- POLYMER HANDBOOK. J. Wiley, 1975
- POLYMER HANDBOOK. J. Wiley, 1989
- POLYMER HANDBOOK. J. Wiley, 2004
- **S. KOLTZENBURG ; M. MASKOS ; O. NUYKEN.** Polymer Chemistry. Springer-Verlag, 2017
- **J. BRANDRUP ; E.H. IMMERGUT.** Polymer Handbook. John Wiley & Sons, 1989
- Analysis of Polymer Dispersions with an Eight-Cell-AUC-Multiplexer: High Resolution Particle Size Distribution and Density Gradient Techniques. **S.E. HARDING ; W. MÄCHTLE et al.** Analytical Ultracentrifugation in Biochemistry and Polymer Science. Royal Society of Chemistry, 1992, 147-175
- Characterization of Aqueous Polymer Dispersions. **H. WIESE.** Polymer Dispersions and Their Industrial Applications. Wiley-VCH, 2002, 41-73
- **M. DIMMERS ; M. DIEDERING.** *in Farbe & Lack,* 2014, vol. 4, 24-29